(19) **Europäisches Patentamt / European Patent Office / Office européen des brevets**

(11) **EP 4 529 298 A1**

(12) # EUROPEAN PATENT APPLICATION
published in accordance with Art. 153(4) EPC

(43) Date of publication:
**26.03.2025 Bulletin 2025/13**

(21) Application number: **23807588.1**

(22) Date of filing: **15.05.2023**

(51) International Patent Classification (IPC):
***H04W 52/30*** (2009.01)   ***H04W 16/28*** (2009.01)
***H04W 88/02*** (2009.01)

(52) Cooperative Patent Classification (CPC):
**H04W 16/28; H04W 52/30; H04W 88/02**

(86) International application number:
**PCT/JP2023/018035**

(87) International publication number:
**WO 2023/223986 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.05.2022 JP 2022081198**

(71) Applicant: **NTT DOCOMO, INC.**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **SUN, Weiqi**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57)   A terminal according to one aspect of the present disclosure includes: a receiving section that receives a configuration of a restriction related to transmission power per panel or per cell, when uplink (UL) simultaneous transmission from multi-panel is supported; and a control section that controls, based on the configuration, transmission of at least one of a first power headroom (PHR) based on actual physical uplink shared channel (PUSCH) transmission and a second PHR independent of actual PUSCH transmission. According to one aspect of the present disclosure, it is possible to appropriately perform transmission power control.

FIG. 5

EP 4 529 298 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems, a UE can use one of multi-panel (or multi-beam) for uplink (UL) transmission. For improvement of UL throughput/reliability, it is studied that simultaneous UL transmission using a plurality of panels (for example, simultaneous multi-panel UL transmission (SiMPUL)) is supported for one or more transmission/reception points (TRPs).

When multi-panel simultaneous UL transmission is supported, the UE simultaneously transmits ULs from two panels, but reporting/calculation of a PHR in this case is not unclear. For example, reporting/calculation of a PHR in a case of applying at least one of multi-panel simultaneous UL transmission, single-panel transmission, and virtual PHR is not clear. Therefore, appropriate transmission control may fail, and communication throughput may be reduced.

Thus, an object of the present disclosure is to provide a terminal, a radio communication method, and a base station that can appropriately perform transmission power control.

Solution to Problem

A terminal according to one aspect of the present disclosure includes: a receiving section that receives a configuration of a restriction related to transmission power per panel or per cell, when uplink (UL) simultaneous transmission from multi-panel is supported; and a control section that controls, based on the configuration, transmission of at least one of a first power headroom (PHR) based on actual physical uplink shared channel (PUSCH) transmission and a second PHR independent of actual PUSCH transmission.

Advantageous Effects of Invention

According to one aspect of the present disclosure, it is possible to appropriately perform transmission power control.

Brief Description of Drawings

[FIG. 1] FIG. 1A to FIG. 1C are diagrams to show examples of PUSCH transmission using a plurality of panels.

[FIG. 2] FIG. 2A and FIG. 2B are diagrams to show examples of PUCCH transmission using a plurality of panels.

[FIG. 3] FIG. 3 is a diagram to show an example of a single entry PHR MAC CE in Rel-16 NR.

[FIG. 4] FIG. 4 is a diagram to show an example of a multiple entry PHR MAC CE in Rel-16 NR.

[FIG. 5] FIG. 5 is a diagram to show an overview of transmission of a PHR.

[FIG. 6] FIG. 6 shows an example in which one MAC CE includes two PHRs corresponding to one cell.

[FIG. 7] FIG. 7 shows an example in which one MAC CE includes one PHR corresponding to one cell.

[FIG. 8] FIG. 8 shows an example in which one MAC CE corresponds to a plurality of cells and includes two PHRs per cell.

[FIG. 9] FIG. 9 shows an example in which one MAC CE corresponds to a plurality of cells and includes one PHR per cell.

[FIG. 10] FIG. 10 is a diagram to show an example of a schematic structure of a radio communication system according to one embodiment.

[FIG. 11] FIG. 11 is a diagram to show an example of a structure of a base station according to one embodiment.

[FIG. 12] FIG. 12 is a diagram to show an example of a structure of a user terminal according to one embodiment.

[FIG. 13] FIG. 13 is a diagram to show an example of a hardware structure of the base station and the user terminal according to one embodiment.

[FIG. 14] FIG. 14 is a diagram to show an example of a vehicle according to one embodiment.

Description of Embodiments

(Multi-panel Transmission)

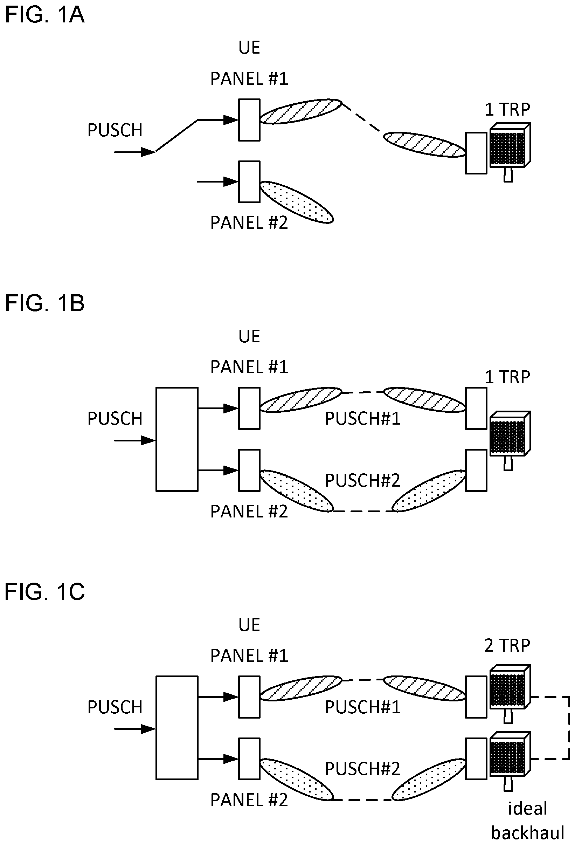

In a UE of each of Rel. 15 and Rel. 16, only one beam and panel are used for UL transmission at one timing (FIG. 1A). For Rel. 17, it is studied that simultaneous UL transmission with multi-beam (plurality of beams) and multi-panel (plurality of panels) is performed for one or more transmission/reception points (TRPs) to improve UL throughput and reliability.

For the simultaneous UL transmission using multi-beam and multi-panel, reception by one TRP including multi-panel (FIG. 1B) or reception by two TRPs including an ideal backhaul (FIG. 1C) is under study. A single PDCCH for scheduling of a plurality of PUSCHs (for example, simultaneous transmission of PUSCH #1 and PUSCH #2) is under study. Support of panel-specific transmission and introduction of a panel ID are under study.

A base station may configure or indicate panel-specific transmission for UL transmission by using UL transmission configuration indication (TCI) or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

In simultaneous UL transmissions using multi-panel, the UE may perform transmission of a plurality of physical uplink control channels (PUCCHs). As transmission schemes for simultaneous UL transmission using multi-panel for PUCCHs, Schemes 1 and 2 below are under study.

{Scheme 1}

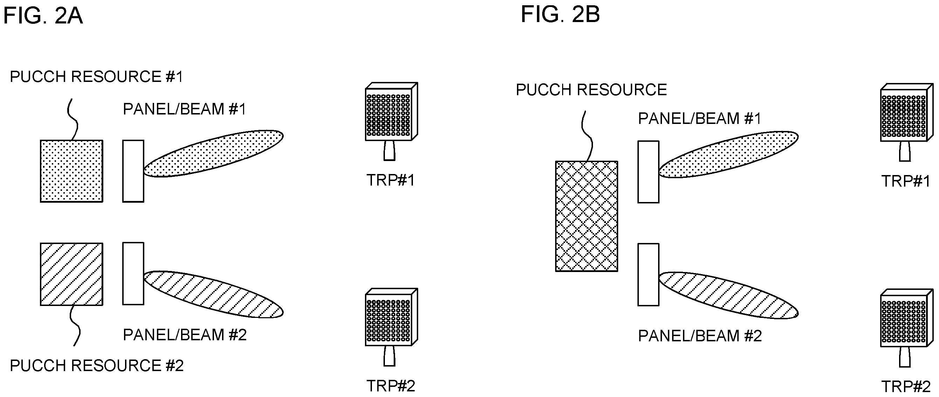

Two PUCCH resources overlap each other in a time domain, and are simultaneously transmitted. Each of the two PUCCH resources is associated with one different panel/beam (see FIG. 2A). Each of the two beams is transmitted to each TRP.

{Scheme 2}

One PUCCH resource is simultaneously transmitted by using two panels/spatial relations. The one PUCCH resource is associated with two panels/beams (see FIG. 2B). Each of the two beams is transmitted to each TRP.

Note that the case where the number of multi-panel is two is described as an example of the present disclosure, but in the present disclosure, the number of panels may be 3 or greater. In other words, the number of panels "2" may be interpreted as a number greater than or equal to 3.

Note that Scheme 2 may be applied to repetition transmission (repetition) of an SFN (single frequency network) PUCCH.

(UL TCI State)

For Rel-16 NR, it is studied that a UL TCI state is used as a UL beam indication method. Notification of the UL TCI state is similar to notification of a DL beam (DL TCI state) for the UE. Note that the DL TCI state may be interpreted as a TCI state for a PDCCH/PDSCH, and vice versa.

A channel/signal for which the UL TCI state is configured (specified) (which may be referred to as a target channel/RS) may be, for example, at least one of a PUSCH (DMRS for PUSCH), a PUCCH (DMRS for PUCCH), a random access channel (Physical Random Access Channel (PRACH)), an SRS, and the like.

An RS (source RS) to have a QCL relationship with the channel/signal may be, for example, a DL RS (for example, an SSB, a CSI-RS, a TRS, or the like) or a UL RS (for example, an SRS, an SRS for beam management, or the like).

In the UL TCI state, the RS to have the QCL relationship with the channel/signal may be associated with a panel ID for receiving or transmitting the RS. The association may be explicitly configured (or specified) by higher layer signaling (for example, RRC signaling, a MAC CE, or the like), or may be implicitly judged.

Correspondence between the RS and the panel ID may be included and configured in UL TCI state information, or may be included and configured in at least one of resource configuration information, spatial relation information, and the like for the RS.

A QCL type indicated by the UL TCI state may be existing QCL types A to D or another QCL type, and may include a given spatial relation, an associated antenna port (port index), and the like.

When an associated panel ID is specified (for example, specified by DCI) for UL transmission, the UE may perform the UL transmission by using a panel corresponding to the panel ID. The panel ID may be associated with a UL TCI state, and when a UL TCI state is specified (or activated) for a given UL channel/signal, the UE may identify a panel used for transmission of the UL channel/signal, in accordance with a panel ID associated with the UL TCI state.

(Transmission Power Control)

<PUSCH Transmission Power Control>

In NR (for example, Rel. 16), transmission power for a PUSCH is controlled based on a TPC command (also referred to as a value, an increasing/decreasing value, a correction value, or the like) indicated by a value of a given field (also referred to as a TPC command field or the like) in DCI.

For example, when a UE transmits a PUSCH on active UL BWP b on carrier f of serving cell c by using a parameter set having index j (open-loop parameter set) and index l of a power control adjustment state, transmission power for the PUSCH ($P_{\mathrm{PUSCH},b,f,c}(i,j,q_d,l)$) in PUSCH transmission occasion (also referred to as a transmission period or the like) i may be expressed by equation (1) below.

[Math. 1]

$$P_{\mathrm{PUSCH}b,f,c}(i,j,q_d,l) =$$

$$= \min\left\{ \begin{array}{l} P_{\mathrm{CMAX},f,c}(i), \\ P_{\mathrm{O\_PUSCH}b,f,c}(j) + 10\log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{array} \right\}\ [\mathrm{dBm}]$$

$$(1)$$

Here, for the power control adjustment state, whether the power control adjustment state has a plurality of states (for example, two states) or a single state may be configured by a higher layer parameter. When a plurality of power control adjustment states are configured, one of the plurality of power control adjustment states may be identified by index l (for example, $l \in \{0, 1\}$). The power control adjustment state may be referred to as a PUSCH power control adjustment state, a first or second state, or the like.

PUSCH transmission occasion i is a given period in which the PUSCH is transmitted, and may be constituted by, for example, one or more symbols, one or more slots, or the like.

In equation (1), $P_{\mathrm{CMAX},f,c}(i)$ is, for example, transmission power (also referred to as maximum transmission power, UE maximum output power, or the like) of a user terminal configured for carrier f of serving cell c in transmission occasion i. $P_{\mathrm{O\_PUSCH},b,f,c}(j)$ is, for example, a parameter related to target received power configured for active UL BWP b on carrier f of serving cell c in parameter set configuration j (also referred to as, for example, a parameter related to transmission power offset, transmission power offset P0, a target received power parameter, or the like).

$M^{PUSCH}_{RB,b,f,c}(i)$ is, for example, the number of resource blocks (bandwidths) allocated to the PUSCH for transmission occasion i on active UL BWP b on carrier f of serving cell c and with subcarrier spacing $\mu$. $\alpha_{b,f,c}(j)$ is a value provided by a higher layer parameter (also referred to as, for example, msg3-Alpha, p0-PUSCH-Alpha, a fractional factor, or the like).

$PL_{b,f,c}(q_d)$ is, for example, a pathloss (pathloss compensation) calculated in the user terminal by using index $q_d$ of a reference signal (pathloss reference RS, pathloss measurement DL RS, PUSCH-PathlossReferenceRS) for a downlink BWP associated with active UL BWP b on carrier f of serving cell c.

$\Delta_{TF,b,f,c}(i)$ is a transmission power adjustment component (offset, transmission format compensation) for UL BWP b on carrier f of serving cell c.

$f_{b,f,c}(i,l)$ is a value based on a TPC command with power control adjustment state index l above for the active UL BWP on carrier f of serving cell c and transmission occasion i (for example, a power control adjustment state, an accumulated value of the TPC command, or a closed-loop value). l may be referred to as a closed-loop index.

When the UE is not provided with the pathloss reference RS (for example, PUSCH-PathlossReferenceRS) or when the UE is not provided with a dedicated higher layer parameter, the UE may calculate $PL_{b,f,c}(q_d)$ by using an RS resource from an SSB used to obtain a Master Information Block (MIB).

When the UE is configured with the number of RS resource indices up to a value of a maximum number of pathloss reference RSs (for example, maxNrofPUSCH-PathlossReferenceRS), and is configured by the pathloss reference RS with a set of respective RS configurations for the RS resource indices, the set of RS resource indices may include one or both of a set of SS/PBCH block indices and a set of CSI-RS resource indices. The UE may identify RS resource index $q_d$ in the set of RS resource indices.

When PUSCH transmission is scheduled by a Random Access Response (RAR) UL grant, the UE may use same RS resource index $q_d$ as that for corresponding PRACH transmission.

When the UE is provided with a PUSCH power control configuration based on a sounding reference signal (SRS) resource indicator (SRI) (for example, SRI-PUSCH-PowerControl) and is provided with one or more values of an ID of the pathloss reference RS, mapping between a set of values for an SRI field in DCI format 0_1 and a set of ID values for the pathloss reference RS may be obtained from higher layer signaling (for example, sri-PUSCH-PowerControl-Id in SRI-PUSCH-PowerControl). The UE may determine RS resource index $q_d$, based on an ID of the pathloss reference RS mapped to an SRI field value in DCI format 0_1 for scheduling the PUSCH.

When PUSCH transmission is scheduled by DCI format 0_0, and the UE is not provided with PUCCH spatial relation information for a PUCCH resource having the lowest index for active UL BWP b on each carrier f and in serving cell c, the UE may use same RS resource index $q_d$ as that for PUCCH transmission in the PUCCH resource.

When PUSCH transmission is scheduled by DCI format 0_0, and the UE is not provided with a spatial setting for PUCCH transmission, when PUSCH transmission is scheduled by DCI format 0_1 not including the SRI field, or when the SRI-based PUSCH power control configuration is not provided for the UE, the UE may use RS resource index $q_d$ having a pathloss reference RS ID of zero.

When a configured grant configuration (for example, ConfiguredGrantConfig) includes a given parameter (for example, rrc-CofiguredUplinkGrant) for PUSCH transmission configured by the configured grant configuration, RS resource index $q_d$ may be provided for the UE by a pathloss reference index (for example, pathlossReferenceIndex) in the given parameter.

When the configured grant configuration does not include the given parameter for the PUSCH transmission configured by the configured grant configuration, the UE may determine RS resource index $q_d$, based on a pathloss reference RS ID value mapped to an SRI field in a DCI format for activating the PUSCH transmission. When the DCI format does not include the SRI field, the UE may determine RS resource index $q_d$ having a pathloss reference RS ID of zero.

<PUCCH Transmission Power Control>

In NR, transmission power for a PUCCH is controlled based on a TPC command (also referred to as a value, an increasing/decreasing value, a correction value, an indicated value, or the like) indicated by a value of a given field (also referred to as a TPC command field, a first field, or the like) in DCI.

For example, by using index l of a power control adjustment state, transmission power for the PUCCH ($P_{PUCCH,b,f,c}(i,q_u,q_d,l)$) in PUCCH transmission occasion (also referred to as a transmission period or the like) i for active UL BWP b on carrier f of serving cell c may be expressed by equation (2) below.

[Math. 2]

$$P_{\text{PUCCH}b,f,c}(i,q_u,q_d,l):$$

$$= \min \left\{ \begin{array}{l} P_{\text{CMAX},f,c}(i), \\ P_{\text{O\_PUCCH}b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\} \text{[dBm]}$$

$$(2)$$

The power control adjustment state may be referred to as a PUCCH power control adjustment state, a first or second state, or the like.

PUCCH transmission occasion i is a given period in which the PUCCH is transmitted, and may be constituted by, for example, one or more symbols, one or more slots, or the like.

In equation (2), $P_{\text{CMAX},f,c}(i)$ is, for example, transmission power (also referred to as maximum transmission power, UE maximum output power, or the like) of a user terminal configured for carrier f of serving cell c in transmission occasion i. $P_{\text{O\_PUCCH},b,f,c}(q_u)$ is, for example, a parameter related to target received power configured for active UL BWP b on carrier f of serving cell c in transmission occasion i (also referred to as, for example, a parameter related to transmission power offset, transmission power offset P0, a target received power parameter, or the like).

$M_{\text{RB},b,f,c}^{\text{PUCCH}}(i)$ is, for example, the number of resource blocks (bandwidths) allocated to the PUCCH for transmission occasion i in active UL BWP b on carrier f of serving cell c and with subcarrier spacing $\mu$. $PL_{b,f,c}(q_d)$ is, for example, a pathloss calculated in the user terminal by using index $q_d$ of a reference signal (pathloss reference RS, pathloss measurement DL RS, PUCCH-PathlossReferenceRS) for a downlink BWP associated with active UL BWP b on carrier f of serving cell c.

$\Delta_{\text{F\_PUCCH}}(F)$ is a higher layer parameter given for each PUCCH format. $\Delta_{\text{TF},b,f,c}(i)$ is a transmission power adjustment component (offset) for UL BWP b on carrier f of serving cell c.

$g_{b,f,c}(i,l)$ is a value based on a TPC command with power control adjustment state index l above for the active UL BWP on carrier f of serving cell c and transmission occasion i (for example, a power control adjustment state, an accumulated value of the TPC command, a closed-loop value, or a PUCCH power adjustment state).

If the UE is provided with information (twoPUCCH-PC-AdjustmentStates) indicating use of two PUCCH power control adjustment states and PUCCH spatial relation information (PUCCH-SpatialRelationInfo), l may equal {0, 1}, and if the UE is not provided with the information indicating use of two PUCCH power control adjustment states or the PUCCH spatial relation information, l may equal 0.

If the UE obtains a TPC command value from DCI format 1_0 or 1_1, and the UE is provided with the PUCCH spatial relation information, the UE may obtain mapping between a PUCCH spatial relation information ID (pucch-SpatialRelationInfoId) value and a closed-loop index (closedLoopIndex or power adjustment state index l) by using an index provided by a PUCCH P0 ID (p0-PUCCH-Id in p0-Set in PUCCH-PowerControl in PUCCH-Config). When the UE receives an activation command including a value of the PUCCH spatial relation information ID, the UE may determine, via a link to a corresponding PUCCH P0 ID, a value of the closed-loop index for providing an l value.

If the UE is provided with a configuration of a $P_{\text{O\_PUCCH},b,f,c}(q_u)$ value for corresponding PUCCH power adjustment state l, by a higher layer, for active UL BWP b on carrier f of serving cell c, $g_{b,f,c}(i,l) = 0$, and k = 0, 1, ..., i. If the UE is provided with the PUCCH spatial relation information, the UE may determine, based on the PUCCH spatial relation information associated with a PUCCH P0 ID corresponding to $q_u$ and a closed-loop index value corresponding to l, an l value based on the $q_u$ value.

$q_u$ may be a PUCCH P0 ID (p0-PUCCH-Id) indicating PUCCH P0 (P0-PUCCH) in PUCCH P0 set (p0-Set).

<SRS Transmission Power Control>

For example, by using index l of a power control adjustment state, transmission power for an SRS ($P_{\text{SRS},b,f,c}(i,q_s,l)$) in reference signal for measurement (Sounding Reference Signal (SRS)) transmission occasion i (also referred to as a transmission period or the like) for active UL BWP b on carrier f of serving cell c may be expressed by equation (3) below.

The power control adjustment state may be referred to as an SRS power control adjustment state, a value based on a TPC command, an accumulated value of a TPC command, a closed-loop value, a first or second state, or the like. l may be referred to as a closed-loop index.

SRS transmission occasion i is a given period in which the SRS is transmitted, and may be constituted by, for example, one or more symbols, one or more slots, or the like.

[Math. 3]

$$P_{SRS,b,f,c}(i,q_s,l)$$

$$= \min \begin{Bmatrix} P_{CMAX,f,c}(i), \\ P_{O\_SRS,b,f,c}(q_s) + 10\log_{10}(2^\mu \cdot M_{SRS,b,f,c}(i)) + \alpha_{SRS,b,f,c}(q_s) \cdot PL_{b,f,c}(q_d) + h_{b,f,c}(i,l) \end{Bmatrix} [dBm]$$

$$(3)$$

In equation (3), $P_{CMAX,f,c}$ (i) is, for example, UE maximum output power for carrier f of serving cell c in SRS transmission occasion i. $P_{O\_SRS,b,f,c}(q_s)$ is a parameter related to target received power (also referred to as, for example, a parameter related to transmission power offset, transmission power offset P0, a target received power parameter, or the like) provided by p0 for active UL BWP b on carrier f of serving cell c and SRS resource set $q_s$ (provided by SRS-ResourceSet and SRS-ResourceSetId).

$M_{SRS,b,f,c}(i)$ is an SRS bandwidth represented by the number of resource blocks for SRS transmission occasion i on active UL BWP b on carrier f of serving cell c and with subcarrier spacing $\mu$.

$\alpha_{SRS,b,f,c}(q_s)$ is provided by $\alpha$ (for example, alpha) for active UL BWP b on carrier f of serving cell c and with subcarrier spacing $\mu$, and for SRS resource set $q_s$.

$PL_{b,f,c}(q_d)$ is a DL path loss estimation value [dB] calculated by the UE using RS resource index $q_d$, for an active DL BWP in serving cell c and SRS resource set $q_s$. RS resource index $q_d$ corresponds to a path loss reference RS (path loss measurement DL RS, provided by, for example, pathlossReferenceRS) associated with SRS resource set $q_s$, and is an SS/PBCH block index (for example, ssb-Index) or a CSI-RS resource index (for example, csi-RS-Index).

$h_{b,f,c}(i,l)$ is an SRS power control adjustment state for the active UL BWP on carrier f of serving cell c, and SRS transmission occasion i. When a configuration of the SRS power control adjustment state (for example, srs-Power-ControlAdjustmentStates) indicates the same power control adjustment state for SRS transmission and PUSCH transmission, $h_{b,f,c}(i,l)$ is the same as current PUSCH power control adjustment state $f_{b,f,c}(i,l)$.

Transmission occasions i for the PUSCH, the PUCCH, and the SRS may each be defined by slot index $n_{s,f}^\mu$ in a frame with a system frame number SFN, first symbol S in a slot, and the number L of consecutive symbols. In PUSCH transmission of repetition type B, a PUSCH transmission occasion may be nominal repetition.

(Power Requirement)

For NR, responses to an issue of Maximum Permitted Exposure (MPE) (or electromagnetic power density exposure) are under study. The UE is required to satisfy, for health and safety, Federal Communication Commission (FCC) regulations related to maximum radiation into the human body.

For example, in Rel-15 NR, limitation using power-management maximum power reduction (P-MPR, maximum allowed UE output power reduction) is defined to limit explosure. For example, in a case of non-carrier aggregation (CA), UE maximum output power $P_{CMAX,f,c}$ is configured such that corresponding $P_{UMAX,f,c}$ (maximum output power to be measured, configured maximum UE output power to be measured) satisfies expression (4) below.

[Math. 4]

$P_{Powerclass} + \Delta P_{IBE} - MAX(MAX(MPR_{f,c}, A - MPR_{f,c}) + \Delta MB_{P,0}, P\text{-}MPR_{f,c}) - MAX\{T(MAX(MPR_{f,c}, A\text{-} MPR_{f,c},)), T(P\text{-}MPR_{f,c})\} \leq P_{UMAX,f,c} \leq EIRP_{max}$   (4)

$EIRP_{max}$ is assumed to be a maximum value of corresponding measurement peak effective isotropic radiated power (EIRP). $P\text{-}MPR_{f,c}$ is assumed to be a value indicating reduction of maximum output power allowed for carrier f of serving cell c. $P\text{-}MPR_{f,c}$ is introduced to an equation of UE maximum output power $P_{CMAX,f,c}$ configured for carrier f of serving cell c. Corresponding total radiated power $P_{TMAX,f,c}$ satisfies $P_{TMAX,f,c} \leq TRP_{max}$.

In a case of carrier aggregation (CA), UE maximum output power $P_{CMAX,f,c}$ is configured such that corresponding $P_{UMAX,f,c}$ satisfies expression (5) below.

[Math. 5]

$P_{Powerclass} - MAX(MAX(MPR, A - MPR) + \Delta MB_{P,n}, P\text{-}MPR) - MAX\{T(MAX(MPR, A\text{-} MPR)), T(P\text{-}MPR)\} \leq P_{U\text{-}MAX} \leq EIRP_{max}$   (5)

$P_{UMAX}$ measured for the carrier aggregation is defined as $P_{UMAX} = \Sigma_{c,f(c)} P_{UMAX,f,c}$. Here, $P_{UMAX,f,c}$ is a linear value of measured power $P_{UMAX,f,c}$ for carrier f = f(c) of serving cell c. Measured total radiated power $P_{TMAX}$ for the carrier aggregation is defined as $P_{TMAX} = 10\log_{10}\Sigma_{c,f(c)}P_{TMAX,f,c}$. Here, $P_{TMAX}$ is a linear value of a measured value of total radiated power $P_{TMAX,f,c}$ for carrier f = f(c) of serving cell c. For total radiated power $P_{TMAX}$, boundaries are defined such that $P_{TMAX} \leq TRP_{max}$.

In other words, the UE can configure the maximum output power as $P_{CMAX}$ such that measured peak EIRP ($P_{UMAX}$) is within a range of a lower limit to an upper limit and measured total radiated power $P_{TMAX}$ satisfies $P_{TMAX} \leq TRP_{ma}$.

(Multi-TRP)

In NR, it is studied that one or a plurality of transmission/reception points (TRPs) (multi-TRP (M-TRP)) perform DL transmission to a UE by using one or a plurality of panels (multi-panel). It is also studied that a UE performs UL transmission to one or a plurality of TRPs.

For future radio systems (for example, NR of Rel. 17 or later versions), it is studied to indicate a plurality of (for example, two) SRS resource indicators (SRIs)/transmitted precoding matrix indicators (TPMIs) by using single DCI (S-DCI) for performing multi-TRP PUSCH repetition transmissions (MTRP PUSCH repetition).

For example, in a case of codebook based transmission, a UE may determine a precoder for PUSCH transmission, based on an SRI, a transmitted rank indicator (TRI), and a TPMI. In a case of non-codebook based transmission, the UE may determine a precoder for PUSCH transmission, based on the SRI. Note that the SRI may be indicated for the UE by DCI or may be given by a higher layer parameter.

When single DCI indicates a plurality of SRIs/TPMIs, option 1 or option 2 below is conceivable:

- option 1: SRIs/TPMIs (values) for a plurality of (for example, two) TRPs are indicated by using a plurality of (for example, two) fields each indicating an SRI/TPMI.
- option 2: One field indicating SRIs/TPMIs is indicated, and a codepoint(s) corresponding to values of a plurality of (for example, two) SRIs/TPMIs is configured for the field indicating the SRIs/TPMIs.

In option 1, a codepoint of each of the plurality of SRI/TPMI fields may correspond to the value of one TPMI. A correspondence (association) between each SRI/TPMI field and the value of the corresponding SRI/TPMI may be defined in a specification in advance. The correspondence (association) between each SRI/TPMI field and the value of the corresponding SRI/TPMI may use a correspondence defined in Rel. 16 or previous versions or may be a correspondence defined in Rel. 17 or later versions. For each of the plurality of SRI/TPMI fields, the correspondence between the SRI/TPMI field and the value of the SRI/TPMI may be different.

In option 2, the codepoint(s) indicated with one SRI/TPMI field may correspond to the values of the plurality of (for example, two) SRIs/TPMIs. A correspondence (association) between the SRI/TPMI field and the value of each of the SRIs/TPMIs may be defined in a specification in advance or may be notified/configured/activated by RRC signaling/MAC CE.

Note that it is studied to dynamically indicate/switch, by DCI, single PUSCH transmission/PUSCH repetition transmissions using a single TRP (STRP) and PUSCH repetition transmissions using multi-TRP (MTRP). The dynamic switch may use a specific field included in DCI defined in Rel. 16 or previous versions or may use a specific field defined in Rel. 17 or later versions (for example, a field for indicating STRP or MTRP operation).

"Dynamic switch" in the present disclosure may mean "switch using at least one of higher layer signaling and physical layer signaling." "Switch" in the present disclosure may be interpreted as switching, change, changing, application, indication, configuration, and the like, and vice versa.

(PHR)

In future radio communication systems (for example, NR), a UE transmits a PH report (Power Headroom Report (PHR)) including information of power headroom (PH) per serving cell, to a network. The network can use the PHR for control of uplink transmission power of the UE.

It is studied to include, when M-TRP PUSCHs are supported/configured/enabled and also reporting of two PHRs for two TRPs is configured/enabled, two PHRs (first PHR and second PHR) in a PHR MAC CE. Reporting two PHRs for two TRPs may be configured for the UE by a higher layer parameter (RRC parameter).

Here, the first PHR may be reported similarly to Rel. 15/16. The second PHR may be a PHR of a TRP different from that of the first PHR. The second PHR may be reported as an actual PHR or may be reported as a virtual PHR.

The actual PHR is a PHR based on actual PUSCH transmission and may be referred to as a real PHR. The actual PHR may be computed based on a power control parameter for actual PUSCH transmission.

The virtual PHR is a PHR independent of actual PUSCH transmission (based on reference PUSCH transmission) and may be referred to as a reference PHR, a PHR complying with a reference format, and the like. The virtual PHR may be computed based on default power control parameters defined already in Rel-15/16 NR or may be computed based on new default power control parameters.

When the UE judges that a Type 1 power headroom report of an active serving cell is based on actual PUSCH transmission, the UE calculates the Type 1 power headroom report for PUSCH transmission occasion i on active UL BWP b on carrier f of serving cell c, as in equation (6) below. The PHR in equation (6) may be referred to as an actual PHR.
[Math. 6]

$$PH_{type1b,f,c}(i,j,q_d,l) = P_{CMAX,f,c}(i) - \left\{ P_{O\_PUSCHb,f,c}(j) + 10\log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i,l) \right\} \quad [dB]$$

$$(6)$$

When the UE judges that a Type 1 power headroom report of an active serving cell is based on reference PUSCH transmission, the UE calculates the Type 1 power headroom report for PUSCH transmission occasion i on active UL BWP b on carrier f of serving cell c, as in equation (7) below. The PHR in equation (7) may be referred to as a virtual PHR.
[Math. 7]

$$PH_{type1b,f,c}(i,j,q_d,l) = \tilde{P}_{CMAX,f,c}(i) - \left\{ P_{O\_PUSCHb,f,c}(j) + \alpha_{b,f,c}(j) \cdot PL_{b,f,c}(q_d) + f_{b,f,c}(i,l) \right\} \quad [dB]$$

$$(7)$$

Here, $P_{CMAX,f,c}(i)$-bar (P in $P_{CMAX,f,c}(i)$ with ~ thereabove) is calculated by assuming MPR = 0 dB, A-MPR = 0 db, P-MPR = 0 dB, and $\Delta T_C$ = 0 dB. A-MPR means Additional MPR. For the remaining parameters, $P_{O\_NOMINAL\_PUSCH,f,c}(0)$ and p0-PUSCH-AlphaSetId = 0 are used for $P_{O\_PUSCH,b,f,c}(j)$ and $\alpha_{b,f,c}(j)$, and pusch-PathlossReferenceRS-Id = 0 and l = 0 are used for $PL_{b,f,c}(q_d)$.

(PHR MAC CE)

A PHR may be transmitted by MAC (Medium Access Control) signaling by using a PUSCH (Physical Uplink Shared Channel). For example, the PHR is notified by using a PHR MAC CE (Control Element) including a MAC PDU (Protocol Data Unit).

In NR, a single entry PHR MAC CE related to a primary cell (PCell) is supported.

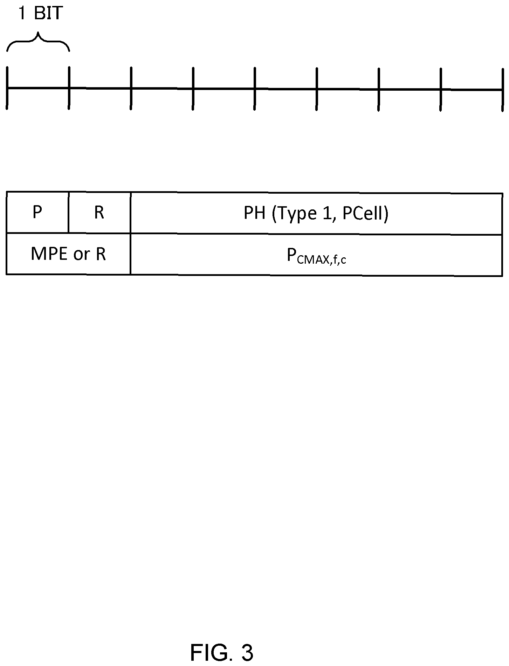

FIG. 3 is a diagram to show an example of a single entry PHR MAC CE in Rel-16 NR. The MAC CE is constituted of two octets (= 16 bits). Each 'R' in FIG. 3 denotes a reserved field of 1 bit and is set at a value '0,' for example.

'PH (Type 1 PCell)' in FIG. 3 denotes a field of 6 bits and indicates an index related to a Type 1 PH of a primary cell (PCell). The index related to a PH is associated with a concrete value of the PH (in units of decibel (dB)).

Note that, for example, a Type 1 PH may be a PH in a case of considering a PUSCH (for example, considering only power of a PUSCH), a Type 2 PH may be a PH in a case of considering a PUCCH (for example, considering power of both a PUSCH and a PUCCH), and a Type 3 PH may be a PH in a case of considering a reference signal for measurement (Sounding Reference Signal (SRS)) (for example, considering power of a PUSCH and an SRS).

'$P_{CMAX,f,c}$' in FIG. 3 denotes a field of 6 bits and indicates an index related to $P_{CMAX,f,c}$ used for calculation of the PH field. The index related to $P_{CMAX,f,c}$ is associated with a concrete UE transmission power level (dB). Note that $P_{CMAX,f,c}$ may be referred to as a maximum transmission power (maximum allowed transmission power) configured for the UE for serving cell c of carrier f. $P_{CMAX,f,c}$ may be represented simply as $P_{CMAX}$, PCMAX, and the like below.

'P' in FIG. 3 may denote a field related to power management maximum power reduction (P-MPR) (or maximum permitted UE output power reduction) or may be a field related to maximum permitted exposure (MPE), for serving cell c. 'MPE' in FIG. 3 may denote a field related to MPE. Fields such as 'P' and 'MPE' may each be interpreted as an 'R' field in a configuration using higher layer signaling to the UE.

In a case where MPE reporting of FR2 (higher layer parameter mpe-Reporting-FR2) is configured and a serving cell operates in FR2, the 'P' field is configured at 0 when a P-MPR value to be applied to satisfy an MPE request is smaller than a specific P-MPR value (for example, P-MPR_00), and is configured at 1 otherwise.

The 'P' field may indicate whether power back-off is applied for power management when MPE reporting of FR2 is not configured or the serving cell operates in FR1. Note that the 'P' field is configured at 1 in a case where, unless power back-off is applied for power management, a corresponding $P_{CMAX}$ field is to take a different value.

In a case where MPE reporting of FR2 (higher layer parameter mpe-Reporting-FR2) is configured, where a serving cell operates in FR2, and where the 'P' field is configured at 1, the 'MPE' field may indicate power back-off to be applied to satisfy an MPE request. This field may indicate an index corresponding to a measured P-MPR value (for example, in units of dB).

In a case where MPE reporting of FR2 is not configured, where the serving cell operates in FR1, or where the 'P' field is configured at 0, an 'R field' (R bits) may be present instead of the 'MPE' field.

In NR, a multiple entry PHR MAC CE including a plurality of pieces of data similar to those of single entry (two octets) described above is also supported. The multiple entry PHR MAC CE may include a PH field and the like for a primary secondary cell (PSCell) and a secondary cell (SCell). Note that the PCell and the PSCell may each be referred to as a special cell (SpCell).

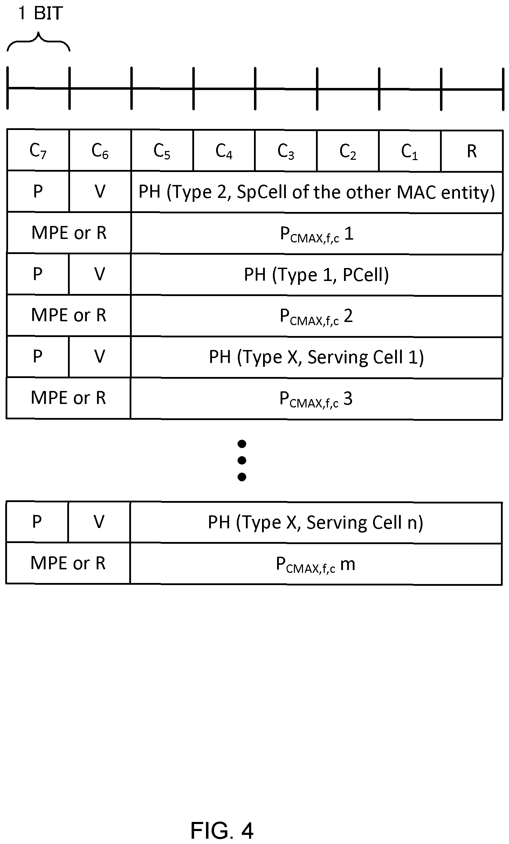

FIG. 4 is a diagram to show an example of a multiple entry PHR MAC CE in Rel-16 NR. Descriptions about fields similar to those in FIG. 3 will not be repeated. Each field of 6 bits in FIG. 4 including an expression 'PH' indicates a PH field for a corresponding type (for example, any of Types 1 to 3 described above) and a corresponding cell.

Note that the presence of a Type 2 PH field for an SpCell of the other MAC entity may be configured by a higher layer parameter phr-Type2OtherCell being true.

Each field of 6 bits including an expression '$P_{CMAX,f,c}$' in FIG. 4 is a $P_{CMAX,f,c}$ field indicating $P_{CMAX,f,c}$ used for calculation of the immediately previous PH field. '$C_i$' in FIG. 4 is a field indicating whether or not the PH field of a serving cell corresponding to serving cell index i is included in the PHR. Note that FIG. 4 corresponds to a case where the highest serving cell index is lower than 8. When the highest serving cell index is equal to or higher than 8, the MAC CE may include a '$C_i$' field capable of indicating a serving cell with i being up to 31, for example.

Note that each of a number attached to "serving cell" in each PH field and a number attached to each $P_{CMAX,f,c}$ field need not mean a serving cell index and may simply mean the number in the order of values included in the MAC CE.

'V' in FIG. 4 denotes a field indicating whether the value of the PH corresponding to the immediately subsequent PH field is based on real transmission (V = 0) or based on a reference format (V = 1). The PH based on a reference format may be referred to as a virtual PH. Note that, when V is 1 (V = 1), the '$P_{CMAC,c}$' field, the 'MPE' field, and the like may be omitted.

The network may transmit PHR configuration information related to a condition that triggers a PHR, to the UE. Here, examples of the PHR configuration information include a threshold value of a prohibit timer, a periodic timer, and a pathloss change. Higher layer signaling may be used for the notification. When the PHR trigger condition is satisfied, the UE triggers a PHR.

(Maximum Transmission Power)

A configuration example of maximum transmission power in panel p on carrier f of serving cell c (maximum transmission power) $P_{CMAXpanel,f,c,p}$ will be described. $P_{CMAXpanel,f,c,p}$ may be represented as $P_{CMAX,f,c,p}$).

<<Option 0>>

The UE may receive a configuration related to maximum transmission power per serving cell and per carrier (for example, a similar configuration to that for Rel. 17), and may determine, based on the configuration, maximum transmission power per panel. For example, the UE may be configured with maximum transmission power for carrier f of serving cell c, as $P_{CMAX,f,c}$, and may determine maximum transmission power $P_{CMAX,f,c,p}$ for each panel p or based on $P_{CMAX,f,c}$ or based on a relationship between $P_{CMAX,f,c}$ and $P_{CMAX,f,c,p}$. $P_{CMAX,f,c}$ and the relationship may be configured for the UE by higher layer signaling/physical layer signaling. For the maximum transmission power per panel in this case, the following examples are conceivable.

<<Option 0-1>>

The UE may determine maximum transmission power $P_{CMAX,f,c,p}$ for panel p, based on equation (8) below. N is the number of panels for which simultaneous transmission is indicated. In other words, maximum transmission powers for the respective panels may be the same.

[Math. 8]

$$P_{CMAX,f,c} = N \cdot P_{CMAX_{panel,f,c,p}}$$

$$(8)$$

For example, N may be 2 when multi-panel simultaneous transmission is indicated. N may be 1 when single-panel transmission is indicated. Alternatively, N may follow at least one of a value configured from a network (base station) by using higher layer signaling/physical layer signaling, and a UE capability. Different values may be applied to N in respective ones of the single-panel transmission and the multi-panel transmission. Alternatively, N may be a maximum number of panels supported by the UE in UL transmission (for example, N = 2), and application of the single-panel transmission or the simultaneous multi-panel transmission may not be indicated from the network.

<<Option 0-2>>

The UE may determine maximum transmission power $P_{CMAX,f,c,p}$ for panel p, based on equation (9) below. In other words, total maximum transmission power of maximum transmission powers for the respective panels p may be maximum transmission power of the UE. Np is a value for panel p, and may vary for each panel. In other words, maximum transmission powers for the respective panels may be different.
[Math. 9]

$$P_{CMAX,f,c} = N_p \cdot P_{CMAX_{panel},f,c,p}$$

$$(9)$$

Np may follow at least one of a value configured from a network (base station) by using higher layer signaling/physical layer signaling, and a UE capability. Different values may be applied to Np in respective cases of single-panel transmission and multi-panel transmission.

<<Option 0-3>>

The UE may determine maximum transmission power $P_{CMAX,f,c,p}$ for panel p, based on equation (10) below. In other words, total maximum transmission power of maximum transmission powers for the respective panels p may be maximum transmission power of the UE. In this case, maximum transmission powers for the respective panels may be the same or different, or maximum transmission powers for some panels may be the same.
[Math. 10]

$$P_{CMAX,f,c} = \sum_p P_{CMAX_{panel},f,c,p}$$

$$(10)$$

Thus, maximum transmission power in panel p, maximum transmission power for all the panels, and a relationship between them are made clear, and the UE can control multi-panel simultaneous UL transmission by using appropriate transmission power.

(M-TRP PHR Reporting of Rel. 17)

In M-TRP PUSCH repetition of Rel. 17, when a PHR MAC CE is reported in slot n, a first PHR for a first TRP is reported similarly to Rel. 16. A second PHR for a second TRP may be defined as in (1) to (3) below.

> (1) When the first PHR is an actual PHR, and the repetition of a PUSCH related to the second TRP is in slot n, the second PHR is an actual PHR.
> (2) When the first PHR is an actual PHR, and the repetition of a PUSCH related to the second TRP is not in slot n, the second PHR is a virtual PHR.
> (3) When the first PHR is a virtual PHR, the second PHR is a virtual PHR.

The virtual PHR may be calculated by using default power control parameters (p0, alpha ($\alpha$), PL-RS, close-dloopindex) per TRP.
When the UE is provided with twoPHRMode on active UL BWP b on carrier f of serving cell c and is provided with two SRS resource sets configured with "codebook" or "non-codebook (nonCodebook)" as usage by srs-ResourceSet-ToAddModList or srs-ResourceSetToAddModListDCI-0-2, the UE provides two kinds of first power headroom report in (1) and (2) below. In (1) and (2), it is assumed that the UE provides a first Type 1 PHR for actual PUSCH repetition of PUSCH transmission initiated earliest in a slot associated with one SRS resource set.

> (1) When the UE transmits PUSCH repetition related to another SRS resource set in slot n, the UE provides a second Type 1 power headroom report for the first actual PUSCH repetition related to the other SRS resource set overlapping slot n.
> (2) Otherwise (when condition (1) is not satisfied), the UE provides the second Type 1 power headroom report for reference PUSCH transmission associated with the other SRS resource set.

(Notes)

In the present disclosure, a "panel" may indicate a value (set of values) of UE capability similarly to Rel. 17. A "panel" may indicate a definition equivalent to other terms such as a "UE antenna group."

A beam may indicate a spatial relation/TCI/spatial relation information (SRI). A TRP may refer to a CORESETPool/SRS resource set.

To simultaneous multi-panel transmission (Simultaneous multi-panel Tx (STxMP)), the following schemes may be applied.

- Single DCI (S-DCI) space division multiplexing (SDM) scheme: Different layers/DMRS ports of one PUSCH are precoded separately and transmitted simultaneously from different UE beams/panels.
- S-DCI frequency division multiplexing (FDM)-A scheme: Different parts of a frequency-domain resource of one PUSCH transmission occasion are transmitted from different UE beams/panels.
- S-DCI FDM-B scheme: A scheme in which two PUSCH transmission occasions of the same/different RVs of the same TB are transmitted from different UE beams/panels on frequency-domain resources not overlapping and the same time-domain resource.
- S-DCI SFN based transmission scheme: Identical PUSCHs/DMRSs are transmitted simultaneously from two different UE beams/panels.
- S-DCI spatial-domain repetition scheme: Two PUSCH transmission occasions having different redundancy versions (RVs) of the same TB are transmitted from two different UE beams/panels on the same time and frequency resource.
- M-DCI scheme: A scheme in which two overlapping PUSCHs (full/partial overlap in the time domain, full/partial overlap or non-overlap in the frequency domain) are transmitted from two different UE beams/panels.

Consider that multi-TPR are assumed in simultaneous multi-panel transmission and that one panel corresponds to one TRP. Hence, in the present disclosure, a PUSCH related to a panel may be referred to as a PUSCH related to a TRP, and a PHR/power of a panel may be referred to as a PHR/power of a TRP.

In the present disclosure, it is conceivable that a UE receives a PUSCH/SRS in one panel and receives a PUCCH/SRS on a time resource fully/partially overlapping PUSCH reception of another panel (performs simultaneous multi-panel reception).

"Single panel transmission" in the present disclosure may be applied only when PUSCH transmission with a single panel is present and PUCCH/SRS transmission in another panel is absent on a time resource fully/partially overlapping that of the PUSCH transmission. Note that, in this case, further study is needed for how to deal with PHR reporting, for example, to report, in a case of PUSCH + SRS, one Type 1 PHR based on the PUSCH and one Type 3 PHR based on the SRS.

Alternatively, "single panel transmission" in the present disclosure may be applied also when PUSCH transmission with a single panel is present and PUCCH/SRS transmission in another panel is present in a time resource fully/partially overlapping that of the PUSCH transmission.

(Assumption of Multi-panel Simultaneous UL Transmission)

In a case of multi-panel simultaneous UL transmission, at least one of assumptions 1-1 to 1-3 below is assumed in consideration of a restriction of maximum UL transmission power.

{Assumption 1-1}

Consider maximum UL transmission power per panel. Actual transmission power of a PUSCH/PUCCH/SRS of panel p of serving cell c is assumed to be equal to or lower than the maximum UL transmission power of panel p of serving cell c. In other words, $P_{panel\_actual,c,p} \leq P_{panel\_max,c,p}$ holds. The maximum UL transmission power of panel p of serving cell c may be calculated by any of equations (8) to (10) (of maximum transmission power) above. Note that an element of carrier f may be removed when carrier is not specified.

$P_{panel\_actual,c,p}$ denotes actual transmission power of panel p of serving cell c, and $P_{panel\_max,c,p}$ denotes maximum UL transmission power of panel p of serving cell c.

{Assumption 1-2}

Consider maximum UL transmission power per cell. The total of actual transmission powers of PUSCHs/PUCCHs/SRSs from a plurality of panels of serving cell c is assumed to be equal to or lower than the maximum UL transmission power of serving cell c. In other words, $\Sigma_p P_{panel\_actual,c,p} \leq P_{cell\_max,c}$ holds. Note that the maximum UL transmission power of serving cell c may be a value determined in Rel. 17 (i.e., $P_{CMAX,f,c}$). $P_{panel\_actual,c,p}$ denotes actual transmission power of panel p of serving cell c, and $P_{cell\_max,c}$ denotes maximum UL transmission power of serving cell c.

{Assumption 1-3}

Both maximum UL transmission power per panel and maximum transmission power per cell may be considered. The transmission powers may satisfy conditions of both assumption 1 and assumption 2.

(Assumption of Single-panel UL Transmission)

In a case of supporting dynamic switching of single-panel transmission and multi-panel simultaneous transmission, at least one of assumptions 2-1 and 2-2 below is assumed.

{Assumption 2-1}

Consider maximum UL transmission power per panel. Actual transmission power of a PUSCH/PUCCH/SRS of single-panel transmission of panel p of serving cell c is assumed to be equal to or lower than the maximum UL transmission power of panel p of serving cell c. In other words, $P_{panel\_actual,c,p} \leq P_{panel\_max,c,p}$ holds.

$P_{panel\_actual,c,p}$ denotes actual transmission power of panel p of serving cell c, and $P_{panel\_max,c,p}$ denotes maximum UL transmission power of panel p of serving cell c.

{Assumption 2-2}

Consider maximum UL transmission power per cell. The total of actual transmission powers of PUSCHs/PUCCHs/SRSs from a single panel of serving cell c is assumed to be equal to or lower than the maximum UL transmission power of serving cell c. In other words, $P_{panel\_actual,c,p} \leq P_{cell\_max,c}$ holds. Note that the maximum UL transmission power of serving cell c may be a value determined in Rel. 17 (i.e., $P_{CMAX,f,c}$).

$P_{panel\_actual,c,p}$ denotes actual transmission power of panel p of serving cell c, and $P_{cell\_max,c}$ denotes maximum UL transmission power of serving cell c.

Note that, in a case of single-panel transmission, assumption 2-1 and assumption 2-2 are the same when $P_{panel\_max,c,p}$ and $P_{cell\_max,c}$ are the same.

(Analysis)

When multi-panel simultaneous UL transmission is supported, the UE simultaneously transmits ULs from two panels, but reporting/calculation of a PHR in this case is not unclear. For example, reporting/calculation of a PHR in a case of applying at least one of multi-panel simultaneous UL transmission, single-panel transmission, and virtual PHR is not clear. Therefore, appropriate transmission control may fail, and communication throughput may be reduced.

Thus, the inventors of the present invention came up with the idea of a radio communication method that can appropriately perform transmission power control for each panel.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, multi-panel simultaneous transmission (simultaneous multi-panel transmission) and multi-panel simultaneous UL transmission (simultaneous multi-panel UL transmission) may be interchangeably interpreted. In the present disclosure, supporting and being configured/indicated may be interchangeably interpreted. In the present disclosure, a loop, a power control loop, a power control loop index, a closed-loop, an open loop, and a power control adjustment state may be interchangeably interpreted. In the present disclosure, transmission power and output power may be interchangeably interpreted.

A power restriction in the present disclosure may mean a restriction by maximum transmission power. A PHR in the present disclosure may mean an actual PHR, a virtual PHR, or both an actual PHR and a virtual PHR, unless specified otherwise. p and q in the present disclosure may mean panel indices.

In the present disclosure, multi-TRP (MTRP, M-TRP), a multi-TRP system, multi-TRP transmission, and multi-PDSCH may be interchangeably interpreted.

In the present disclosure, a "PHR," a "PH," a "PH field," a "PH value," and the like may be interchangeably interpreted. In the present disclosure, a PH field and a PH field of a given type (for example, Type 1/2/3/X) may be interchangeably interpreted.

Note that, in the present disclosure, a PHR MAC CE may include fields ($P_{CMAX}$ fields, P fields, and the like) for a plurality of respective serving cells.

A "$P_{CMAX}$ field/P-MPR value/power back-off of (/for/corresponding to) a PH field" and a "$P_{CMAX}$ field/P-MPR value/power back-off" of (/for/corresponding to) PUSCH transmission corresponding to a PH field may be interchangeably interpreted.

In the present disclosure, a P-MPR, a P-MPR value, and power back-off may be interchangeably interpreted.

(Radio Communication Method)

<First Embodiment>

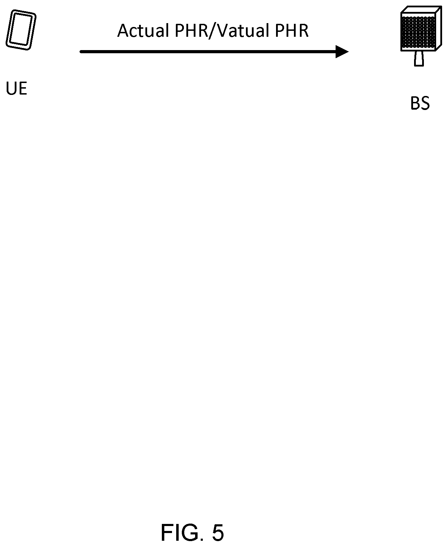

When uplink (UL) simultaneous transmission from multi-panel is supported, a UE receives a configuration of a restriction related to transmission power per panel/per cell. The UE controls, based on the configuration, transmission (reporting) of at least one of a power headroom (PHR) based on actual physical uplink shared channel (PUSCH) transmission (first PHR) and a PHR independent of actual PUSCH transmission (second PHR) (FIG. 5). The restriction may be maximum UL transmission power, and may be maximum UL transmission power per panel in equations (8) to (10) or maximum UL transmission power per cell determined similarly to equations (8) to (10), for example. The UE may determine maximum UL transmission power, based on capability.

{Aspect 1-1}

In assumption 1-1 of multi-panel simultaneous UL transmission, maximum UL transmission power per panel is considered. When PUSCH transmission of serving cell c is multi-panel simultaneous UL transmission, the UE may report a PHR(s) of a PUSCH(s) of serving cell c as described in options below.

<<Option 1>>

The UE reports two actual PHRs for two panels. The UE calculates the two actual PHRs, based on a power restriction per panel, in equation (11).
[Math. 11]

$$PHR_{c,p} = P_{panel\_max,c,p} - \{P_{O_{PUSCH},b,f,c,p}(j) + 10log_{10}(2^{\mu} \cdot M^{PUSCH}_{RB,b,f,c,p}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(11)$$

For each panel, a PHR is calculated based on the maximum UL transmission power of the panel and transmission power of a PUSCH related to the panel calculated by configuration parameters (such as P0, $\alpha$, PL-RS, closedloopindex, and resource allocation) from the network to be used for PUSCH transmission. p denotes a panel index. $P_{panel\_max,c,p}$ may be calculated similarly to $P_{CMAXpanel,f,c,p}$ ($P_{CMAX,f,c,p}$) in equations (8) to (10) described above.

<<Option 2>>

The UE reports one actual PHR out of PHRs corresponding to two panels. The PHR of each panel is calculated based on a power restriction value per panel similarly to option 1 of this aspect. The UE may apply any of (1) to (5) below.

(1) The UE always reports a PHR related to a first panel/second panel.
(2) The UE is configured/indicated with whether to report a PHR related to a first panel/second panel, from the network (base station) by physical layer signaling/higher layer signaling.
(3) The UE determines a PHR of which panel to report and reports a panel index together with the PHR.
(4) The UE reports a PHR with the largest/smallest PHR value out of PHRs of a plurality of panels.
(5) The UE reports an average value of PHRs of a plurality of panels.

In the present disclosure, a first panel/second panel may indicate a first/second SRI/TCI state, an SRS resource set with the lowest/highest ID, a panel with the lowest/highest ID, or a TRP with the lowest/highest ID (when one panel is associated with a TRP).

<<Option 3>>

The UE may report a PHR(s) according to option 1/2, and the UE may further report two PHRs for two panels based on a power restriction per cell as in equation (12) below.
[Math. 12]

$$xPHR_{c,p} = P_{cell\_max,c} - \{P_{O_{PUSCH},b,f,c,p}(j) + 10log_{10}(2^{\mu} \cdot M^{PUSCH}_{RB,b,f,c,p}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(12)$$

For each panel, a PHR is calculated based on the maximum UL transmission power of a cell and transmission power of a PUSCH related to the panel calculated by configuration parameters (such as P0, $\alpha$, PL-RS, closedloopindex, and resource allocation) to be used for PUSCH transmission. p denotes a panel index. $P_{cell\_max,c}$ may be calculated similarly to $P_{CMAXpanel,f,c,p}$ ($P_{CMAX,f,c,p}$) in equations (8) to (10) described above. This option is to intend to provide a PHR reference for single-panel transmission when multi-panel simultaneous transmission is based on a power restriction per panel while single-panel transmission is based on a power restriction per cell.

<<Option 4>>

The UE may report a PHR(s) according to option 1/2, and the UE may further report a PHR for one panel out of two panels, based on a power restriction of cell. For each panel, a PHR may be calculated similarly to $xPHR_{c,p}$ in option 3 (equation (12)), based on the cell power restriction. The UE may apply any of (1) to (5) below.

(1) The UE always reports a PHR related to a first panel/second panel.
(2) The UE is configured/indicated with whether to report a PHR related to a first panel/second panel, from the network (base station) by physical layer signaling/higher layer signaling.
(3) The UE determines a PHR of which panel to report and reports a panel index together with the PHR.
(4) The UE reports a PHR with the largest/smallest PHR value out of PHRs of a plurality of panels.
(5) The UE reports an average value of PHRs of a plurality of panels.

{Aspect 1-2}

In assumption 2-1, maximum UL transmission power per panel is considered. When PUSCH transmission of serving cell c is single-panel transmission of panel p, the UE reports a PHR(s) of a PUSCH(s) of serving cell c according to any of the following options.

<<Option 1>>

The UE reports one actual PHR of a serving cell, based on a power restriction per cell, as in equation (13). A PHR is an actual PHR of panel p, and is calculated based on the maximum UL transmission power of the serving cell and transmission power of a PUSCH calculated by configuration parameters (such as P0, $\alpha$, PL-RS, closedloopindex, and resource allocation) to be used for PUSCH transmission, similarly to Rel. 17.
[Math. 13]

$$PHR_c = PHR_{c,p} = P_{cell\_max,c} - \{P_{0_{PUSCH},b,f,c,p}(j) + 10log_{10}(2^\mu \cdot M_{RB,b,f,c,p}^{PUSCH}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(13)$$

The maximum UL transmission power of the serving cell and the power control parameters may be determined similarly to Rel. 17. This option may be used together with assumption 2-2 of single-panel assumption. In other words, a maximum power restriction per cell is considered in single-panel transmission.

<<Option 2>>

The UE may report one actual PHR for a serving cell, based on a transmission power restriction per panel, as in equation (14). The PHR is an actual PHR of panel p, and is calculated based on the maximum UL transmission power of the panel and transmission power of a PUSCH calculated by configuration parameters (such as P0, $\alpha$, PL-RS, closedloopindex, and resource allocation) to be used for PUSCH transmission.
[Math. 14]

$$PHR_c = PHR_{c,p} = P_{panel\_max,c,p} - \{P_{0_{PUSCH},b,f,c,p}(j) + 10log_{10}(2^\mu \cdot M_{RB,b,f,c,p}^{PUSCH}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(14)$$

The maximum UL transmission power of the panel may be determined similarly to equations (8) to (10). The power control parameters may be determined similarly to Rel. 17. This option may be used together with assumption 2-1 of single-panel transmission. In other words, a maximum transmission power restriction per panel may be considered for single-panel transmission. Note that, in single-panel transmission, when the maximum transmission power per panel is the same as the maximum transmission power per cell, option 2 results in being the same as option 1.

<<Option 3>>

The UE may report two PHRs for two panels for a serving cell. The UE may report an actual PHR of panel p, based on a power restriction per cell and report a virtual PHR of another panel q, based on a restriction per cell. The actual PHR of panel p is reported as option 1.
The virtual PHR of the other panel q is calculated, based on the maximum UL transmission power of the serving cell and virtual transmission power of a PUSCH calculated by default configuration parameters (such as P0, $\alpha$, PL-RS, closedloopindex, and resource allocation), similarly to Rel. 17 (equation (15)).
[Math. 15]

$$vPHR_{c,q} = P_{cell\_max,c} - \{P_{O_{PUSCH},b,f,c,q}(j) + \alpha_{b,f,c,q}(j) \cdot PL_{b,f,c,q}(q_d) + f_{b,f,c,q}(i,l)\}$$

$$(15)$$

q denotes a panel index. The maximum UL transmission power of the serving cell and the default power control parameters may be determined similarly to Rel. 17. This option may be used together with assumption 2-2 of single-panel transmission.

<<Option 4>>

The UE may report two PHRs for two panels for a serving cell. The UE may report an actual PHR of panel p, based on a power restriction per panel, and report a virtual PHR of another panel q, based on a power restriction per panel. The actual PHR of panel p may be reported as option 2.

The virtual PHR of the other panel q may be calculated, based on the maximum UL transmission power of the panel and virtual transmission power of a PUSCH calculated by default configuration parameters (such as P0, $\alpha$, PL-RS, closedloopindex, and resource allocation), as in equation (16).

[Math. 16]

$$vPHR_{c,q} = P_{panel\_max,c,q} - \{P_{O_{PUSCH},b,f,c,q}(j) + \alpha_{b,f,c,q}(j) \cdot PL_{b,f,c,q}(q_d) + f_{b,f,c,q}(i,l)\}$$

$$(16)$$

The default power control parameters may be determined similarly to Rel. 17. This option may be used together with assumption 2-1 of single-panel transmission. In other words, a maximum transmission power restriction per panel is considered for single-panel transmission. In single-panel transmission, when the maximum transmission power per panel is the same as the maximum transmission power per cell, option 4 results in being the same as option 3.

<<Option 5>>

The UE may report a PHR(s) according to option 1 or 3 (based on a restriction per cell), and the UE may further report two PHRs for two panels, based on a restriction per panel as follows.

A PHR of panel p is calculated based on the maximum UL transmission power of the panel and transmission power of a PUSCH calculated by configuration parameters (such as P0, $\alpha$, PL-RS, closedloopindex, and resource allocation) to be used for PUSCH transmission, as in equation (17).

[Math. 17]

$$xPHR_{c,p} = P_{panel\_max,c,p} - \{P_{O_{PUSCH},b,f,c,p}(j) + 10log_{10}(2^{\mu} \cdot M^{PUSCH}_{RB,b,f,c,p}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(17)$$

Alternatively, a PHR of panel p may be calculated for panel q, in other words, based on virtual transmission power, as in equation (18).

[Math. 18]

$$xPHR_{c,p} = P_{panel\_max,c,p} - \{P_{O_{PUSCH},b,f,c,p}(j) + \alpha_{b,f,c,p}(j) \cdot PL_{b,f,c,p}(q_d) + f_{b,f,c,p}(i,l)\}$$

$$(18)$$

For a PHR of another panel, q may be calculated by the maximum UL transmission power of the panel and default configuration parameters (such as P0, $\alpha$, PL-RS, and closedloopindex) calculated based on virtual transmission power of a PUSCH, as in equation (19).

[Math. 19]

$$xPHR_{c,q} = P_{panel\_max,c,q} - \{P_{O_{PUSCH},b,f,c,q}(j) + \alpha_{b,f,c,q}(j) \cdot PL_{b,f,c,q}(q_d) + f_{b,f,c,q}(i,l)\}$$

$$(19)$$

<<Option 6>>

The UE may report a PHR(s) according to option 1 or 3 (based on a restriction per cell), and may further report one PHR out of PHRs for two panels based on a restriction per panel as follows.

For each panel, a PHR may be calculated similarly to $xPHR_{c,p}$ and $xPHR_{c,q}$ in option 5. The UE may report at least one PHR out of the two PHRs by applying any of (1) to (6) below.

(1) The UE always reports a PHR related to a first panel/second panel.
(2) The UE is configured/indicated with whether to report a PHR related to a first panel/second panel, from the network (base station) by physical layer signaling/higher layer signaling.
(3) The UE determines a PHR of which panel to report and reports a panel index together with the PHR.
(4) The UE reports a PHR with the largest/smallest PHR value out of PHRs of a plurality of panels.
(5) The UE reports an average value of PHRs of a plurality of panels.
(6) A PHR of panel p, in other words, a PHR related to a panel used for single-panel transmission, is always reported.

According to options 5 and 6, it is possible to appropriately provide a PHR reference when multi-panel simultaneous transmission is based on a power restriction per panel while single-panel transmission is based on a power restriction per cell.

{Aspect 1-3}

In assumption 2-1 of single-panel reception, maximum UL transmission power per panel is considered. When PUSCH transmission is absent in serving cell c, the UE reports a virtual PHR(s) of a PUSCH(s) of serving cell c by applying any of options 1 to 4 below.

<<Option 1>>

The UE reports two virtual PHRs for two panels of a serving cell. The virtual PHR of each panel is calculated based on a power restriction per cell. The virtual PHR of each panel may reuses option 3 of aspect 1-2.

<<Option 2>>

The UE reports two virtual PHRs for two panels of a serving cell. The virtual PHR of each panel is calculated based on a power restriction per panel. The virtual PHR of each panel may reuses option 4 of aspect 1-2.

<<Option 3>>

The UE reports one PHR for two panels of a serving cell. The virtual PHR of each panel is calculated based on a power restriction per cell similarly to option 1/2.

<<Option 4>>

The UE reports one PHR for two panels of a serving cell. The virtual PHR of each panel is calculated based on a power restriction per panel similarly to option 2. For options 3 and 4, any of (1) to (5) below may be applied.

(1) The UE always reports a PHR related to a first panel/second panel.
(2) The UE is configured/indicated with whether to report a PHR related to a first panel/second panel, from the network (base station) by physical layer signaling/higher layer signaling.
(3) The UE determines a PHR of which panel to report and reports a panel index together with the PHR.
(4) The UE reports a PHR with the largest/smallest PHR value out of PHRs of a plurality of panels.
(5) The UE reports an average value of PHRs of a plurality of panels.

<<Option 5>>

A combination of option 1/3 and option 2/4 may be applied. Specifically, the UE may report a virtual PHR(s), based on a restriction per cell according to option 1/3, and may additionally report a virtual PHR(s), based on a restriction per panel according to option 2/4. In this way, it is possible to provide a PHR reference(s) for both multi-panel simultaneous transmission and single-panel transmission when multi-panel simultaneous transmission is based on a power restriction per panel while single-panel transmission is based on a power restriction per cell.

<Second Embodiment>

When uplink (UL) simultaneous transmission from multi-panel is supported, a UE receives a configuration of a restriction related to transmission power per panel/per cell. The UE controls, based on the configuration, transmission (reporting) of at least one of a power headroom (PHR) based on actual physical uplink shared channel (PUSCH) transmission (first PHR) and a PHR independent of actual PUSCH transmission (second PHR) (FIG. 5). At least one of the first PHR and the second PHR may be based on single-panel transmission.

{Aspect 2-1}

In a case of assumption 1-2 of multi-panel simultaneous transmission, maximum UL received power per cell is considered. When PUSCH transmission of serving cell c is multi-panel simultaneous transmission, the UE reports a PHR(s) of a PUSCH(s) of serving cell c according to any of the following options.

<<Option 1>>

The UE reports one actual PHR for a serving cell. The UE calculates based on the maximum UL transmission power of a cell and the total of transmission powers of PUSCHs related to a plurality of panels calculated by configuration parameters (such as P0, $\alpha$, PL-RS, closedloopindex, and resource allocation) to be used for PUSCH transmission (equation (20)). The maximum UL transmission power of the serving cell is determined similarly to Rel. 17.
[Math. 20]

$$PHR_c = P_{cell\_max,c} - \sum_p \{P_{0_{PUSCH},b,f,c,p}(j) + 10log_{10}(2^\mu \cdot M^{PUSCH}_{RB,b,f,c,p}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(20)$$

<<Option 2>>

The UE reports a PHR according to option 1. Then, the UE further reports two PHRs for two panels (based on single-panel transmission). For each panel, the UE computes a PHR, based on the maximum UL transmission power of a cell and transmission power of a PUSCH related to the panel calculated by configuration parameters (such as P0, $\alpha$, PL-RS, closedloopindex, and resource allocation) to be used for PUSCH transmission (equation (21)). The maximum UL transmission power of the serving cell is determined similarly to Rel. 17.
[Math. 21]

$$xPHR_{c,p} = P_{cell\_max,c} - \{P_{0_{PUSCH},b,f,c,p}(j) + 10log_{10}(2^\mu \cdot M^{PUSCH}_{RB,b,f,c,p}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(21)$$

In this way, the UE can report a PHR as a reference for multi-panel simultaneous transmission and further report PHRs as references for single-panel transmission.

<<Option 3>>

The UE reports a PHR according to option 1. Then, the UE further reports one actual PHR for two panels (based on single-panel transmission) as follows. For each panel, a PHR is calculated as in option 2. The UE may apply any of (1) to (5) below.

    (1) The UE always reports a PHR related to a first panel/second panel.
    (2) The UE is configured/indicated with whether to report a PHR related to a first panel/second panel, from the network (base station) by physical layer signaling/higher layer signaling.
    (3) The UE determines a PHR of which panel to report and reports a panel index together with the PHR.
    (4) The UE reports a PHR with the largest/smallest PHR value out of PHRs of a plurality of panels.
    (5) The UE reports an average value of PHRs of a plurality of panels.

In this way, the UE can report a PHR as a reference for multi-panel simultaneous transmission and further report PHRs as references for single-panel transmission.

{Aspect 2-2}

In assumption 1-2 of multi-panel simultaneous transmission, maximum UL transmission power per cell is considered. When PUSCH transmission of serving cell c is single-panel transmission of panel p, the UE reports a PHR(s) of a PUSCH(s) of serving cell c in any of the following options. PHR transmission in this aspect may be based on single-panel transmission.

<<Option 1>>

The UE reports one actual PHR for a serving cell. The UE may calculate the PHR, based on the maximum UL transmission power of a serving cell and transmission power of a PUSCH calculated by configuration parameters (such as P0, $\alpha$, PL-RS, closedloopindex, and resource allocation) to be used for PUSH transmission, similarly to Rel. 17 (equation (22)).
[Math. 22]

$$PHR_c = PHR_{c,p} = P_{cell\_max,c} - \{P_{O_{PUSCH},b,f,c,p}(j) + 10log_{10}(2^\mu \cdot M_{RB,b,f,c,p}^{PUSCH}(i)) + \alpha_{b,f,c,p}(j) \cdot PL_{b,f,c,p}(q_d) + \Delta_{TF,b,f,c,p}(i) + f_{b,f,c,p}(i,l)\}$$

$$(22)$$

The maximum UL transmission power of the serving cell and the power control parameters may be determined similarly to Rel. 17.

<<Option 2>>

The UE reports two PHRs for two panels. The UE reports an actual PHR of panel p and reports a virtual PHR of another panel q. The virtual PHR of the other panel q is calculated, based on the maximum UL transmission power of the serving cell and virtual transmission power of a PUSCH calculated by default configuration parameters (such as P0, $\alpha$, PL-RS, closedloopindex, and resource allocation), similarly to Rel. 17 (equation (23)). q denotes a panel index.
[Math. 23]

$$vPHR_{c,q} = P_{cell\_max,c} - \{P_{O_{PUSCH},b,f,c,q}(j) + \alpha_{b,f,c,q}(j) \cdot PL_{b,f,c,q}(q_d) + f_{b,f,c,q}(i,l)\}$$

$$(23)$$

The maximum UL transmission power of the serving cell and the power control parameters may be determined similarly to Rel. 17.

<<Option 3>>

The UE reports contents of option 1/2, and the UE further reports a virtual PHR (virtual multi-panel simultaneous transmission PHR) as follows. The virtual multi-panel simultaneous transmission PHR is calculated based on the maximum UL transmission power of a serving cell, transmission power of a PUSCH related to panel p calculated by configuration parameters (such as P0, $\alpha$, PL-RS, closedloopindex, and resource allocation) to be used for PUSCH transmission, and virtual transmission power of a PUSCH related to panel q calculated by default configuration parameters (such as P0, $\alpha$, PL-RS, closedloopindex, and resource allocation) (equation (24)). p and q denote panel indices.
[Math. 24]

$$vPHR_{c,STxMP} = P_{cell\_max,c} - \{P_{O_{PUSCH},b,f,c,p}(j) + 10log_{10}(2^\mu \cdot M_{RB,b,f,c,p}^{PUSCH}(i)) + \alpha_{b,f,c,p}(j) \cdot PL_{b,f,c,p}(q_d) + \Delta_{TF,b,f,c,p}(i) + f_{b,f,c,p}(i,l)\} -$$
$$\{P_{O_{PUSCH},b,f,c,q}(j) + \alpha_{b,f,c,q}(j) \cdot PL_{b,f,c,q}(q_d) + f_{b,f,c,q}(i,l)\}$$

$$(24)$$

The maximum UL transmission power of the serving cell, the power control parameters, and the default power control parameters may be determined similarly to Rel. 17.

<<Option 4>>

The UE reports contents of option 1/2, and the UE further reports a virtual PHR (virtual multi-panel simultaneous transmission PHR) as follows.

The virtual multi-panel simultaneous PHR is calculated based on the maximum UL transmission power of a serving cell and the total of virtual transmission powers of PUSCHs related to a plurality of panels calculated by default configuration parameters (such as P0, $\alpha$, PL-RS, closedloopindex, and resource allocation), similarly to Rel. 17 (equation (25)).

[Math. 25]

$$vPHR_{c,STxMP} = P_{cell\_max,c} - \sum_p \{ P_{O_{PUSCH},b,f,c,p}(j) + \alpha_{b,f,c,p}(j) \cdot PL_{b,f,c,p}(q_d) + f_{b,f,c,p}(i,l) \}$$

$$(25)$$

The maximum UL transmission power of the serving cell, the power control parameters, and the default power control parameters may be determined similarly to Rel. 17.

With options 3 and 4, the UE can report a PHR as a reference for multi-panel simultaneous transmission and further report PHRs as references for single-panel transmission.

{Aspect 2-3}

In assumption 1-2 of multi-panel simultaneous transmission, maximum UL transmission power per cell may be considered. When PUSCH transmission is absent in serving cell c, the UE reports a virtual PHR(s) for a PUSCH(s) of serving cell c, based on options 1 and 2 below. PHR transmission in this aspect may correspond to a virtual PHR.

<<Option 1>>

The UE reports two virtual PHRs for two panels. The virtual PHR of each panel may be calculated similarly to the virtual PHR in option 2 of aspect 2-2.

<<Option 2>>

The UE reports one virtual PHR out of PHRs of a plurality of panels. The virtual PHR of each panel may be calculated similarly to the virtual PHR in option 2 of aspect 2-2. For option 2, any of (1) to (5) below may be applied.

    (1) The UE always reports a PHR related to a first panel/second panel.
    (2) The UE is configured/indicated with whether to report a PHR related to a first panel/second panel, from the network (base station) by physical layer signaling/higher layer signaling.
    (3) The UE determines a PHR of which panel to report and reports a panel index together with the PHR.
    (4) The UE reports a PHR with the largest/smallest PHR value out of PHRs of a plurality of panels.
    (5) The UE reports an average value of PHRs of a plurality of panels.

<<Option 3>>

The UE reports contents of option 1/2, and the UE further reports a virtual PHR (virtual multi-panel simultaneous transmission PHR). The virtual multi-panel simultaneous transmission PHR is calculated similarly to the virtual multi-panel simultaneous transmission PHR in option 4 of aspect 2-2. With option 3, the UE can report a PHR as a reference for multi-panel simultaneous transmission and further report PHRs as references for single-panel transmission.

<Third Embodiment>

In assumption 1-3 of multi-panel simultaneous transmission, both maximum UL transmission power per panel and maximum UL transmission power per cell are considered.

{Aspect 3-1}

When PUSCH transmission of serving cell c is multi-panel simultaneous transmission, the UE applies a combination of aspect 1-1 and aspect 2-1 and reports a PHR(s) of a PUSCH(s) of serving cell c. In other words, the UE reports both a PHR(s) according to aspect 1-1 and a PHR(s) according to aspect 2-1.

{Aspect 3-2}

When PUSCH transmission of serving cell c is single-panel transmission, the UE applies a combination of aspect 1-2 and aspect 2-2 and reports a PHR(s) of a PUSCH(s) of serving cell c. In other words, the UE reports both a PHR(s) according to aspect 1-2 and a PHR(s) according to aspect 2-2.

{Aspect 3-3}

When PUSCH transmission is absent in serving cell c, the UE applies a combination of aspect 1-3 and aspect 2-3 and reports a PHR(s) for a PUSCH(s) of serving cell c. In other words, the UE reports both a PHR(s) according to aspect 1-3 and a PHR(s) according to aspect 2-3.

<Notes>

In each embodiment/aspect above, an actual PHR is calculated based on actual PUSCH transmission and is calculated based on configured power control parameters to be used for PUSCH transmission. A virtual PHR is calculated based on reference PUSCH transmission and is calculated based on default power control parameters determined according to a rule defined in advance. The power control parameters are configured by a network (base station) by physical layer signaling/higher layer signaling.
In single-panel transmission, when one actual PHR and one virtual PHR are reported for each of two panels, the actual PHR corresponds to a panel used/associated with actual PUSCH transmission and is calculated based on the actual PUSCH transmission. The virtual PHR corresponds to another panel not used for PUSCH transmission and is calculated based on reference/virtual PUSCH transmission associated with the other panel.
To a PHR in the present disclosure, a single entry PHR (for single serving cell), a multi-entry PHR (for multi-serving cell), or both a single entry PHR (for single serving cell) and a multi-entry PHR (for multi-serving cell) may be applied.

<Variations>

{Variation 1}

In a case of multi-cell (multi-serving cell), when a PHR is transmitted in serving cell c1, the UE may report a PHR(s) of serving cell c2 as follows.
When a plurality of cells are configured for a UE for PUSCH transmission, SCS configuration $\mu1$ on active UL BWP b1 on carrier f1 of serving cell c1 is smaller than SCS configuration $\mu2$ on active UL BWP b2 on carrier f2 of serving cell c2, and the UE provides a Type 1 power headroom report in PUSCH transmission in a slot on active UL BWP b1 overlapping a plurality of slots on active UL BWP b2, the UE provides a Type 1 power headroom report for the first PUSCH in the first slot of the plurality of slots on active UL BWP b2 completely overlapping the slot on active UL BWP b1 (if present).
When identical SCS configurations on active UL BWP b1 on carrier f1 of serving cell c1 and active UL BWP b2 on carrier f2 of serving cell c2 are configured for the UE in a plurality of cells for PUSCH transmission, and the UE provides a Type 1 power headroom report in PUSCH transmission in a slot on active UL BWP b1, the UE provides a Type 1 power headroom report for the first PUSCH in the slot on active UL BWP b2 overlapping the slot on active UL BWP b1 (if present).
When a plurality of cells are configured for the UE for PUSCH transmission, and the UE provides a Type 1 power headroom report in PUSCH transmission of PUSCH repetition type B with nominal repetition performed over a plurality of slots on active UL BWP b1 and overlapping one or a plurality of slots on active UL BWP b2, the UE provides a Type 1 power headroom report for the first PUSCH in the first slot of one or the plurality of slots on active UL BWP b2 overlapping the plurality of slots of the nominal repetition on active UL BWP b1 (if present).

{Variation 2}

In a case of multi-serving cell, when a PHR of serving cell c2 is reported at the time when a PHR is transmitted in serving cell c1, the following options may be applied

<<Option 1>>

The rule of Rel. 17 (variation 1) may be reused. Specifically, the UE provides a PHR for the "first PUSCH on the first slot on UL BWP b2 of serving cell c2 partially/completely overlapping a slot on BWP b1 of serving cell c1 from which a PHR report is transmitted, or the first PUSCH."

<<Option 2-1>>

The UE provides a PHR for the "first multi-panel simultaneous transmission PUSCH transmission on the first slot on UL BWP b2 of serving cell c2 partially/completely overlapping a slot on BWP b1 of serving cell c1 from which a PHR report is transmitted, or the first multi-panel simultaneous transmission PUSCH transmission."

<<Option 2-2>>

The UE provides a PHR for the "first single-panel PUSCH transmission on the first slot on UL BWP b2 of serving cell c2 partially/completely overlapping a slot on BWP b1 of serving cell c1 from which a PHR report is transmitted, or the first single-panel PUSCH transmission."

<<Option 2-3>>

The UE provides a PHR for the "first single-panel PUSCH transmission from the first panel on the first slot on UL BWP b2 of serving cell c2 partially/completely overlapping a slot on BWP b1 of serving cell c1 from which a PHR report is transmitted, or the first single-panel PUSCH transmission from the first panel."

<<Option 2-4>>

The UE provides a PHR for the "first single-panel PUSCH transmission from the second panel on the first slot on UL BWP b2 of serving cell c2 partially/completely overlapping a slot on BWP b1 of serving cell c1 from which a PHR report is transmitted, or the first single-panel PUSCH transmission from the second panel."

<<Option 2-5>>

A plurality of options among options 2-1 to 2-4 are supported. For example, the UE reports a PHR for each of option 2-1 + option 2-2, specifically, PUSCH transmission of the first multi-panel simultaneous transmission and the first single-panel PUSCH transmission.

<<Option 2-6>>

The UE may be configured/triggered/indicated with any of the options from a network (base station), and report a PHR(s), based on the configuration/trigger/indication.
When a PUSCH determined based on the rule of Rel. 17 or a new rule (any of options 2-1 to 2-6) for UL BWP 2 of serving cell 2 corresponds to multi-panel simultaneous transmission, the UE may report a PHR(s) according to aspect 1-1/2-1/3-1. A PUSCH determined based on the rule of Rel. 17 or a new rule for UL BWP 2 of serving cell 2 corresponds to single-panel transmission, the UE may report a PHR(s) according to aspect 1-2/2-2/3-2. When a PUSCH determined based on the rule of Rel. 17 or a new rule for UL BWP 2 of serving cell 2 is a reference PUSCH, the UE may report a PHR(s) according to aspect 1-3/2-3/3-3.

<Fourth Embodiment>

In each of the embodiments above, when PHRs of two panels are reported, any of (1) to (3) below may be applied.

(1) a MAC CE of Rel. 17 for multi-TRP PHR reporting may be reused. Specifically, an "enhanced single entry PHR for MAC CE for multi-TRP" and an "enhanced multi-entry PHR for MAC CE for multi-TRP" may be applied.
(2) A new MAC CE for multi-panel simultaneous transmission with two or more PHR fields for each serving cell is introduced. One MAC CE may include PHRs of a plurality of cells.
(3) Each of two MAC CEs reports two PHRs for two panels.

When two PHR fields are reported by one MAC CE ((2) above), the two PHR fields are associated with respective different panels. Specifically, a first PHR field is associated with a first panel, and a second PHR field is associated with a second panel.

Alternatively, in a case of single-panel transmission, when one actual PHR and one virtual PHR are reported for two respective panels, the actual PHR is for the panel used for/associated with actual PUSCH transmission, the virtual PHR is for another panel not used for the PUSCH transmission, and the transmission is performed based on reference/virtual PUSCH transmission associated with the other panel.

When two MAC CEs are reported for the two PHRs for two panels ((3) above), the two MAC CEs may be differentiated from each other by different LCIDs. Specifically, a first MAC CE is associated with a first panel, and a second MAC CE is associated with a second panel. The two MAC CE may be differentiated from each other by panel indices or TRP indices included in the MAC CEs (it is considered that one panel is associated with one TRP).

Alternatively, in a case of single-panel transmission, when one actual PHR and one virtual PHR are reported for two respective panels, the actual PHR is for the panel used for/associated with actual PUSCH transmission, the virtual PHR is for another panel not used for the PUSCH transmission, and the transmission is performed based on reference/virtual PUSCH transmission associated with the other panel.

In the above, a first/second panel may indicate a first/second SRI/TCI state, an SRS resource set with the lowest/highest ID, a panel with the lowest/highest ID, or a TRP with the lowest/highest ID (it is considered that one panel is associated with a TRP).

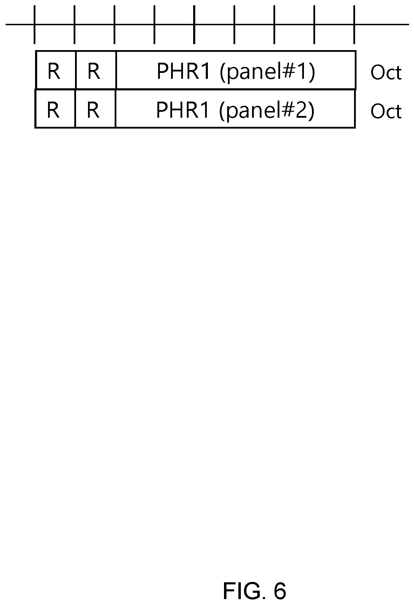

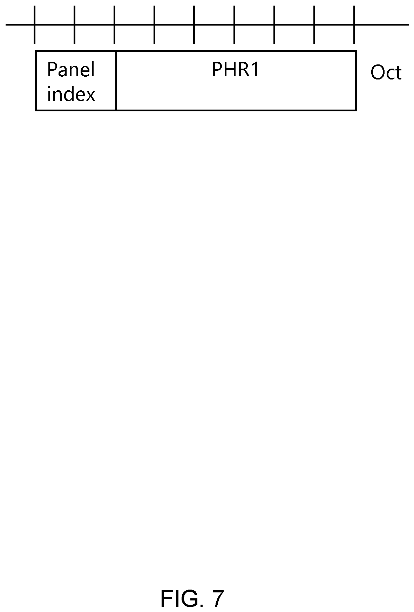

Concrete examples of a MAC CE of this aspect will be described. FIG. 6 shows an example in which one MAC CE includes two PHRs corresponding to one cell. FIG. 7 shows an example in which one MAC CE includes one PHR corresponding to one cell. In FIG. 7, a panel index is included separately from the PHR.

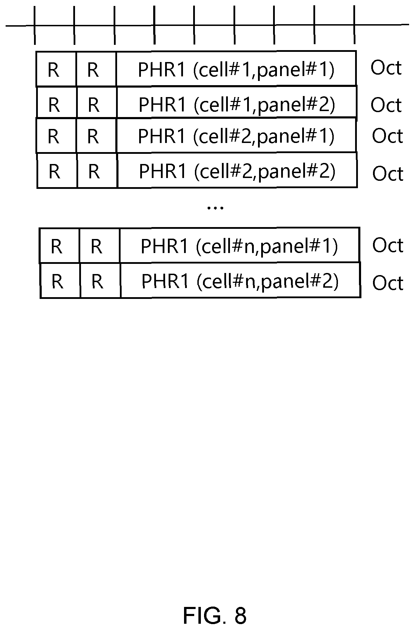

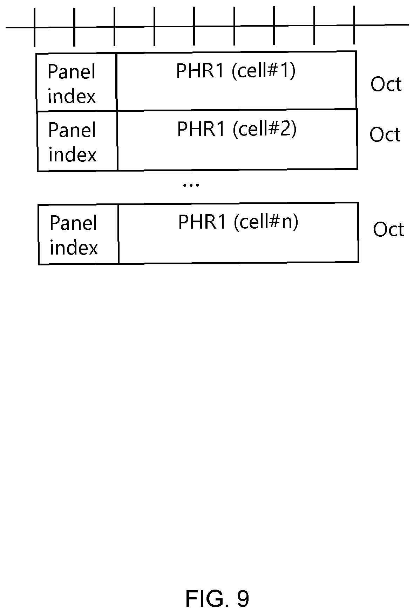

FIG. 8 shows an example in which one MAC CE corresponds to a plurality of cells and includes two PHRs per cell. FIG. 9 shows an example in which one MAC CE corresponds to a plurality of cells and includes one PHR per cell. In FIG. 9, a panel index is included separately from a PHR.

Each MAC CE may include, for example, an identifier indicating whether each PHR is an actual PHR or a virtual PHR (similar to a V field in a MAC CE of Rel. 16/17), maximum power per panel, maximum power per cell (similar to $P_{CMAX}$ in a MAC CE of Rel. 16/17), MPE indication for panel, MPE indication for cell (similar to a P field and an MPE field in MAC CE of Rel. 16/17), and the like.

<Others>

Note that aspects 1-2 and 2-2 may indicate a method of reporting a PHR(s) when single-panel transmission is scheduled under assumptions 1-1 to 1-3 of multi-panel simultaneous transmission. For example, when assumption 1-1 (restriction per panel) of multi-panel simultaneous transmission is applied, and single-panel transmission is scheduled, a PHR per panel of multi-panel simultaneous transmission is reported under a restriction per panel, in consideration of switching between single-panel transmission and multi-panel simultaneous transmission.

When assumption 1-2 (restriction per cell) of multi-panel simultaneous transmission is applied, and single-panel transmission is scheduled, a virtual PHR of multi-panel simultaneous transmission is reported under a restriction per cell, in consideration of switching between single-panel transmission and multi-panel simultaneous transmission.

A UE may be configured/indicated with dynamic switching between single-panel transmission and multi-panel simultaneous transmission by physical layer signaling/higher layer signaling. The UE may transmit (report) UE capability indicating whether to support dynamic switching between single-panel transmission and multi-panel simultaneous transmission. The UE may apply a different embodiment/aspect/option depending on whether to support dynamic switching between single-panel transmission and multi-panel simultaneous transmission.

<Supplement>

At least one of the above-described embodiments may be employed only in the UE that has reported a specific UE capability or supports the specific UE capability.

The specific UE capability may indicate at least one of the following:

- Support of specific processing/operation/control/information for at least one of the embodiments above
- Support of multi-panel simultaneous transmission/reception by the UE
- Support of a power restriction per panel or a power restriction per cell for simultaneous multi-panel transmission by the UE
- Support of a power restriction per panel or a power restriction per cell for single-panel transmission by the UE (when simultaneous multi-panel transmission is supported)
- Support of reporting of two PHRs for two panels for one serving cell by the UE

The specific UE capability may be capability applied over all the frequencies (commonly irrespective of frequency), capability per frequency (for example, a cell, a band, a BWP), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured with specific information related to the above-described embodiment by higher layer signaling.

When the UE does not support at least one of the specific UE capabilities or is not configured with the specific information, the UE may apply operation of Rel. 15/16, for example.

(Supplementary Note A)

With respect to one embodiment of the present disclosure, supplementary notes of the following invention are added.

{Supplementary Note 1}

A terminal including:

a receiving section that receives a configuration of a restriction related to transmission power per panel or per cell, when uplink (UL) simultaneous transmission from multi-panel is supported; and
a control section that controls, based on the configuration, transmission of at least one of a first power headroom (PHR) based on actual physical uplink shared channel (PUSCH) transmission and a second PHR independent of actual PUSCH transmission.

{Supplementary Note 2}

The terminal according to supplementary note 1, wherein the control section controls transmission of at least one of a PHR based on a restriction related to transmission power per panel and a PHR based on a restriction related to transmission power per cell.

{Supplementary Note 3}

The terminal according to supplementary note 1 or 2, wherein the control section controls transmission of both the first PHR and the second PHR.

{Supplementary Note 4}

The terminal according to any one of supplementary notes 1 to 3, wherein the control section transmits a PHR of one panel out of two panels.

(Supplementary Note B)

With respect to one embodiment of the present disclosure, supplementary notes of the following invention are added.

{Supplementary Note 1}

A terminal including:

a receiving section that receives a configuration of a restriction related to transmission power per panel or per cell, when uplink (UL) simultaneous transmission from multi-panel is supported; and
a control section that controls, based on the configuration, transmission of at least one of a first power headroom (PHR) based on actual physical uplink shared channel (PUSCH) transmission and a second PHR independent of actual PUSCH transmission, wherein
at least one of the first PHR and the second PHR is based on single-panel transmission.

{Supplementary Note 2}

The terminal according to supplementary note 1, wherein the control section controls transmission of a PHR based on a restriction related to transmission power per cell.

{Supplementary Note 3}

The terminal according to supplementary note 1 or 2, wherein the control section controls transmission of both the first PHR and the second PHR.

{Supplementary Note 4}

The terminal according to any one of supplementary notes 1 to 3, wherein the control section transmits a PHR of one panel out of two panels.

(Supplementary Note C)

With respect to one embodiment of the present disclosure, supplementary notes of the following invention are added.

{Supplementary Note 1}

A terminal including:

a control section that applies a power headroom (PHR) per panel, when uplink (UL) simultaneous transmission from multi-pane is supported; and
a transmitting section that transmits a Medium Access Control Control Element (MAC CE) including the PHR per panel.

{Supplementary Note 2}

The terminal according to supplementary note 1, wherein the MAC CE includes two PHRs per cell.

{Supplementary Note 3}

The terminal according to supplementary note 1 or 2, wherein the MAC CE includes a panel index corresponding to the PHR.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

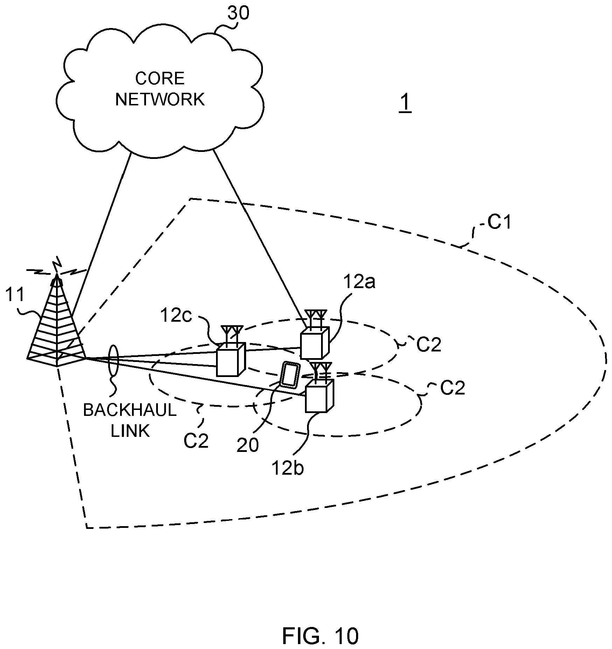

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

(Base Station)

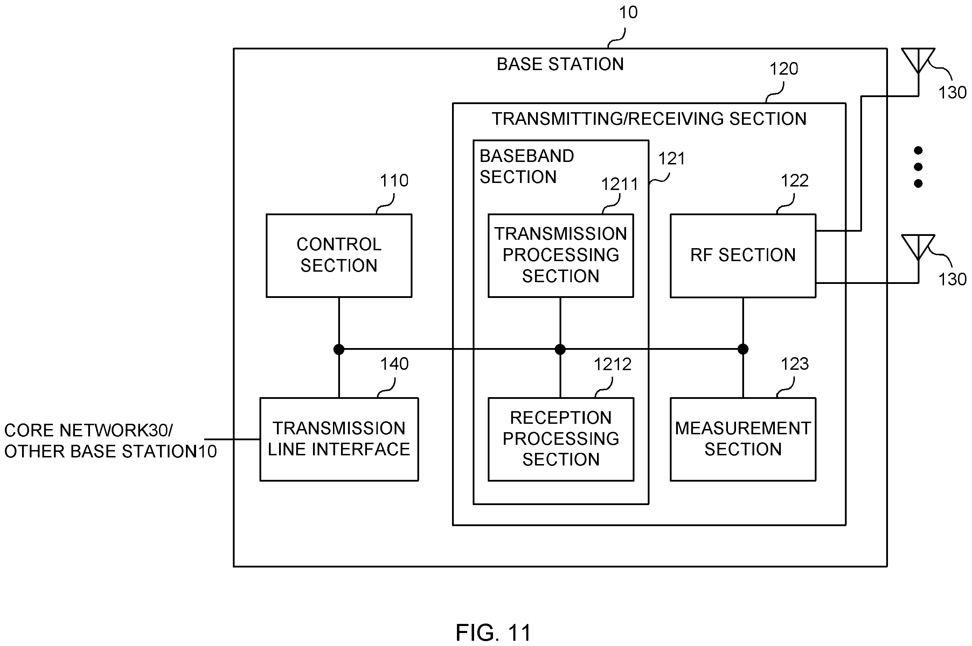

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a restriction related to transmission power per panel or per cell, when uplink (UL) simultaneous transmission from multi-panel is supported.

When uplink (UL) simultaneous transmission from multi-pane is supported, a power headroom (PHR) per panel is applied, and the transmitting/receiving section 120 may receive a Medium Access Control Control Element (MAC CE) including the PHR per panel.

The control section 110 may control at least one of a first power headroom (PHR) based on actual physical uplink shared channel (PUSCH) transmission and a second PHR independent of actual PUSCH transmission, the first PHR and the second PHR being transmitted based on the configuration. At least one of the first PHR and the second PHR may be based on single-panel transmission.

(User Terminal)

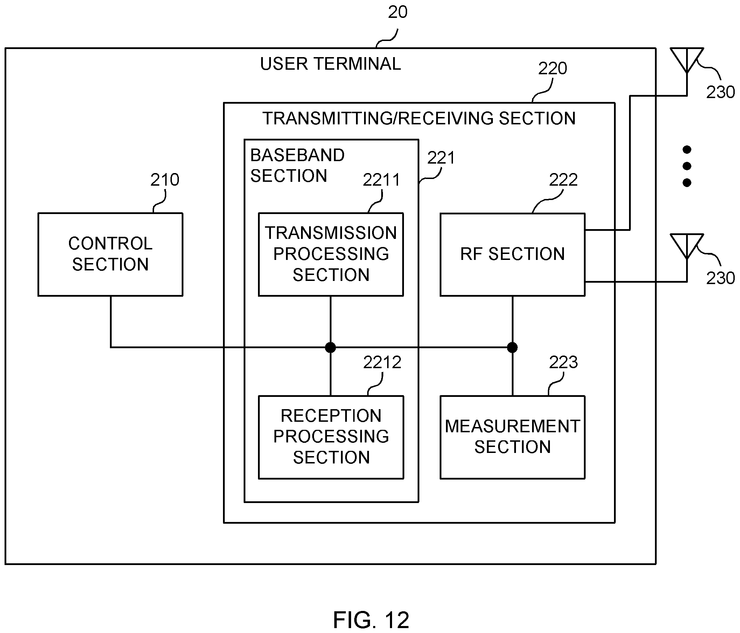

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration of a restriction related to transmission power per panel or per cell, when uplink (UL) simultaneous transmission from multi-panel is supported.

The control section 210 may control, based on the configuration, at least one of a first power headroom (PHR) based on actual physical uplink shared channel (PUSCH) transmission and a second PHR independent of actual PUSCH transmission. At least one of the first PHR and the second PHR may be based on single-panel transmission.

The control section 210 may control transmission of at least one of a PHR based on a restriction related to transmission power per panel and a PHR based on a restriction related to transmission power per cell.

The control section 210 may control transmission of both the first PHR and the second PHR.

The control section 210 may control transmission of a PHR of one panel out of two panels.

The control section 210 may apply a power headroom (PHR) per panel when uplink (UL) simultaneous transmission from multi-panel is supported.

The transmitting/receiving section 220 may transmit a Medium Access Control Control Element (MAC CE) including the PHR per panel. The MAC CE may include two PHRs per cell. The MAC CE may include a panel index corresponding to the PHR.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

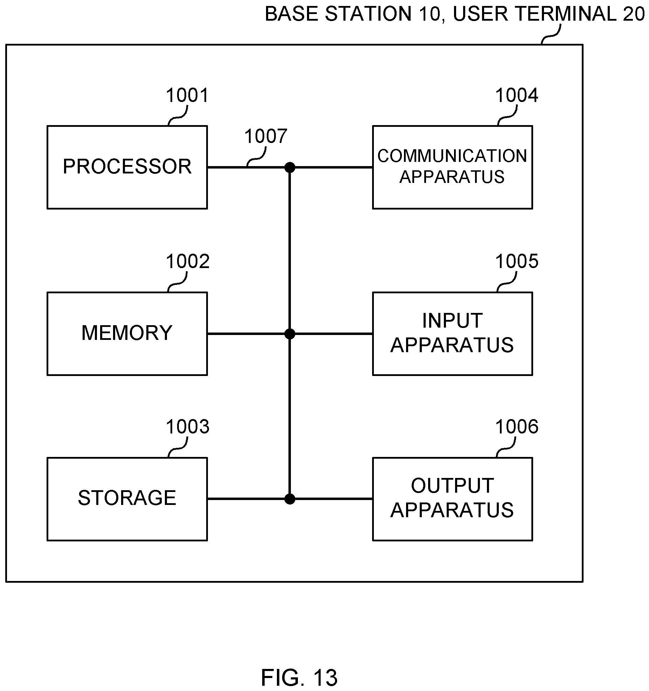

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted by using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "X holds") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into a plurality of smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interpreted as a case that the base station indicates, for the terminal, control/operation based on the information, and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

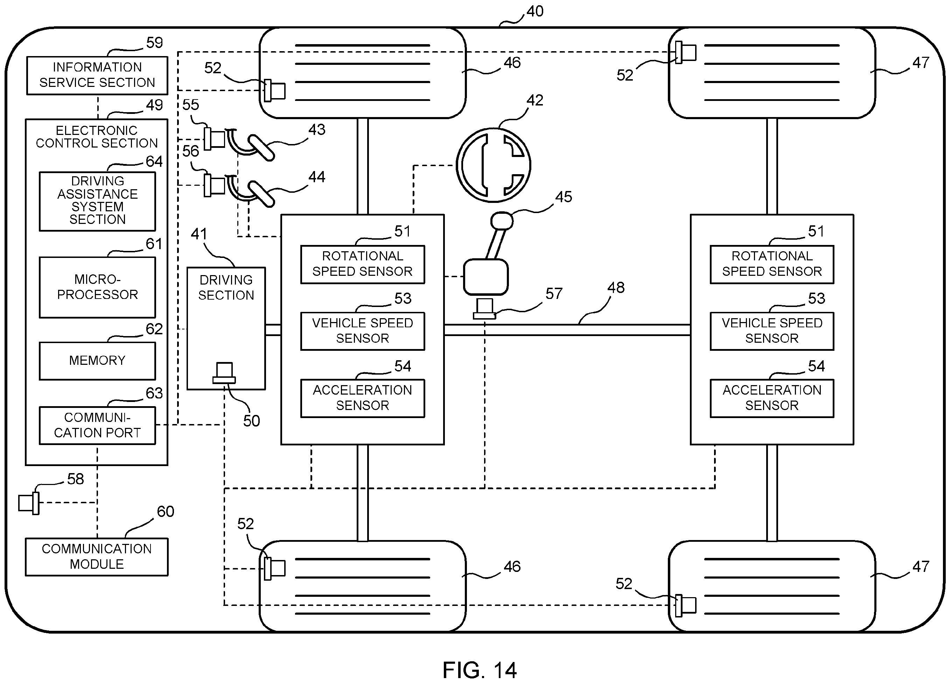

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "less than or equal to," "less than," "greater than or equal to," "more than," "equal to," and the like may be interchangeably interpreted. In the present disclosure, the words meaning "good," "poor", "large," "small," "high," "low," "fast," "slow," "broad," "narrow," and the like may be interchangeably interpreted irrespective of the positive degree, the comparative degree, and the superlative degree. In the present disclosure, the words meaning "good," "poor," "large," "small," "high, " "low, " "fast," "slow, " "broad, " "narrow, " and the like may be interpreted as expressions with "i th" (i is any integer), and vice versa, irrespective of the positive degree, the comparative degree, and the superlative degree (for example, "highest" and "i th highest" may be interchangeably interpreted).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-81198 filed on May 17, 2022, the entire contents of which are incorporated herein by reference.

**Claims**

1. A terminal comprising:

    a receiving section that receives a configuration of a restriction related to transmission power per panel or per cell, when uplink (UL) simultaneous transmission from multi-panel is supported; and
    a control section that controls, based on the configuration, transmission of at least one of a first power headroom (PHR) based on actual physical uplink shared channel (PUSCH) transmission and a second PHR independent of actual PUSCH transmission.

2. The terminal according to claim 1, wherein
    the control section controls transmission of at least one of a PHR based on a restriction related to transmission power per panel and a PHR based on a restriction related to transmission power per cell.

3. The terminal according to claim 1, wherein
    the control section controls transmission of both the first PHR and the second PHR.

4. The terminal according to claim 1, wherein

the control section controls transmission of a PHR of one panel out of two panels.

5. A radio communication method for a terminal, the radio communication method comprising:

when uplink (UL) simultaneous transmission from multi-panel is supported, receiving a configuration of a restriction related to transmission power per panel or per cell; and
controlling, based on the configuration, transmission of at least one of a first power headroom (PHR) based on actual physical uplink shared channel (PUSCH) transmission and a second PHR independent of actual PUSCH transmission.

6. A base station comprising:

a transmitting section that transmits a configuration of a restriction related to transmission power per panel or per cell, when uplink (UL) simultaneous transmission from multi-panel is supported; and
a control section that controls reception of at least one of a first power headroom (PHR) based on actual physical uplink shared channel (PUSCH) transmission and a second PHR independent of actual PUSCH transmission, the first PHR and the second PHR being transmitted based on the configuration.

FIG. 1A

UE
PANEL #1

PUSCH

1 TRP

PANEL #2

FIG. 1B

UE
PANEL #1

PUSCH

1 TRP

PUSCH#1

PUSCH#2

PANEL #2

FIG. 1C

UE
PANEL #1

PUSCH

2 TRP

PUSCH#1

PUSCH#2

PANEL #2

ideal
backhaul

FIG. 2A

PUCCH RESOURCE #1

PANEL/BEAM #1

TRP#1

PANEL/BEAM #2

TRP#2

PUCCH RESOURCE #2

FIG. 2B

PUCCH RESOURCE

PANEL/BEAM #1

TRP#1

PANEL/BEAM #2

TRP#2

1 BIT

| P | R | PH (Type 1, PCell) |
|---|---|---|
| MPE or R | | $P_{CMAX,f,c}$ |

FIG. 3

1 BIT

| $C_7$ | $C_6$ | $C_5$ | $C_4$ | $C_3$ | $C_2$ | $C_1$ | R |
|---|---|---|---|---|---|---|---|
| P | V | PH (Type 2, SpCell of the other MAC entity) | | | | | |
| MPE or R | | $P_{CMAX,f,c}$ 1 | | | | | |
| P | V | PH (Type 1, PCell) | | | | | |
| MPE or R | | $P_{CMAX,f,c}$ 2 | | | | | |
| P | V | PH (Type X, Serving Cell 1) | | | | | |
| MPE or R | | $P_{CMAX,f,c}$ 3 | | | | | |

⋮

| P | V | PH (Type X, Serving Cell n) | | | | | |
| MPE or R | | $P_{CMAX,f,c}$ m | | | | | |

FIG. 4

UE

Actual PHR/Vatual PHR

BS

FIG. 5

| R | R | PHR1 (panel#1) | Oct |
|---|---|----------------|-----|
| R | R | PHR1 (panel#2) | Oct |

FIG. 6

| Panel index | PHR1 | Oct |

FIG. 7

| R | R | PHR1 (cell#1,panel#1) | Oct |
|---|---|---|---|
| R | R | PHR1 (cell#1,panel#2) | Oct |
| R | R | PHR1 (cell#2,panel#1) | Oct |
| R | R | PHR1 (cell#2,panel#2) | Oct |

...

| R | R | PHR1 (cell#n,panel#1) | Oct |
|---|---|---|---|
| R | R | PHR1 (cell#n,panel#2) | Oct |

FIG. 8

| Panel index | PHR1 (cell#1) | Oct |
| Panel index | PHR1 (cell#2) | Oct |

...

| Panel index | PHR1 (cell#n) | Oct |

FIG. 9

FIG. 10

FIG. 11

FIG. 12

BASE STATION 10, USER TERMINAL 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 13

FIG. 14

## INTERNATIONAL SEARCH REPORT

International application No.

**PCT/JP2023/018035**

### A. CLASSIFICATION OF SUBJECT MATTER

*H04W 52/30*(2009.01)i; *H04W 16/28*(2009.01)i; *H04W 88/02*(2009.01)i
FI:   H04W52/30; H04W16/28 151; H04W88/02 141

According to International Patent Classification (IPC) or to both national classification and IPC

### B. FIELDS SEARCHED

Minimum documentation searched (classification system followed by classification symbols)

H04W4/00-99/00; H04B7/24-7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | VIVO. Views on UL precoding indication for multi-panel transmission [online]. 3GPP TSG RAN WG1 Meeting #109-e R1-2203546. 29 April 2022, [retrieved on 28 June 2023], Retrieved from the Internet <URL: https://www.3gpp.org/ftp/tsg_ran/WG1_RL1/TSGR1_109-e/Docs/R1-2203546.zip> <br> sections 1, 5.2, 5.3 | 1-6 |
| Y | JP 2013-520917 A (LG ELECTRONICS INC.) 06 June 2013 (2013-06-06) <br> paragraphs [0090]-[0093] | 1-6 |
| A | CATT. On unified TCI framework extension for multi-TRP operation [online]. 3GPP TSG RAN WG1 Meeting #109-e R1-2203441. 29 April 2022, [retrieved on 28 June 2023], Retrieved from the Internet <URL: https://www.3gpp.org/ftp/tsg_ran/WG1_RL1/TSGR1_109-e/Docs/R1-2203441.zip> <br> entire text | 1-6 |

☐ Further documents are listed in the continuation of Box C.       ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 June 2023** | **11 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/018035**

| Patent document cited in search report | | | Publication date (day/month/year) | Patent family member(s) | Publication date (day/month/year) |
|---|---|---|---|---|---|
| JP | 2013-520917 | A | 06 June 2013 | US 2012/0314640 A1 paragraphs [0104]-[0109]<br>WO 2011/105856 A2<br>EP 2525618 A2<br>CN 102771173 A<br>KR 10-2012-0130100 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022081198 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010